(19) Europäisches Patentamt / European Patent Office / Office européen des brevets

(11) **EP 4 074 674 A1**

(12) **EUROPEAN PATENT APPLICATION**
published in accordance with Art. 153(4) EPC

(43) Date of publication:
**19.10.2022 Bulletin 2022/42**

(21) Application number: **20900380.5**

(22) Date of filing: **08.12.2020**

(51) International Patent Classification (IPC):
**C04B 35/488** (2006.01)

(52) Cooperative Patent Classification (CPC):
**C04B 35/488**

(86) International application number:
**PCT/JP2020/045669**

(87) International publication number:
**WO 2021/117720 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 10.12.2019 JP 2019223217
10.12.2019 JP 2019223218

(71) Applicant: **Tosoh Corporation**
**Yamaguchi 746-8501 (JP)**

(72) Inventors:
• **FUKIAGE Taku**
  **Shunan-shi Yamaguchi 746-8501 (JP)**
• **NAGAYAMA Hitoshi**
  **Shunan-shi Yamaguchi 746-8501 (JP)**
• **KAWAMURA Kenta**
  **Shunan-shi Yamaguchi 746-8501 (JP)**
• **TSUKIMORI Takashi**
  **Shunan-shi Yamaguchi 746-8501 (JP)**
• **FUJISAKI Hiroyuki**
  **Shunan-shi Yamaguchi 746-8501 (JP)**

(74) Representative: **Müller-Boré & Partner**
**Patentanwälte PartG mbB**
**Friedenheimer Brücke 21**
**80639 München (DE)**

(54) **SINTERED COMPACT HAVING EXCEPTIONAL IMPACT RESISTANCE**

(57) To provide a sintered body with improved impact resistance due to impact absorption through plastic deformation before brittle fracture for an impact exceeding the fracture resistance of the sintered body, and/or a method for producing the sintered body.

A sintered body including: zirconia containing a stabilizer; and a region in which an impact mark is formed when an impact force is applied.

FIG. 7

702

EP 4 074 674 A1

## Description

Technical Field

The present disclosure relates to a sintered body with high impact resistance and more particularly to a sintered body with high impact resistance composed mainly of zirconia.

Background Art

Ceramics have higher mechanical characteristics and chemical stability but are more brittle than metallic materials. Thus, a dynamic impact, such as dropping, at room temperature tends to cause fracture of a sintered body of zirconia ceramic or the like due to generation and development of a crack, that is, brittle fracture. To prevent fracture due to such brittle fracture, improvement in fracture toughness has been studied.

For example, it is reported in Patent Literature 1 that $SrAl_{12}O_{19}$ is dispersed in 4% by mole yttria-containing zirconia to improve fracture toughness. It is reported in Patent Literature 2 that a cubic phase $Sr_xNbO_3$ is dispersed in zirconia to improve fracture toughness and drop resistance.

Citation List

Patent Literature

PTL 1: Japanese Unexamined Patent Application Publication No. 2008-037746
PTL 2: Japanese Unexamined Patent Application Publication (Translation of PCT Application) No. 2019-501855

Summary of Invention

Technical Problem

The improvement in impact resistance in Patent Literature 1 and Patent Literature 2 is a result of improvement in fracture resistance due to improved fracture toughness. In any sintered bodies, an impact exceeding the fracture resistance initially causes brittle fracture, such as the generation of a crack, and the brittle fracture proceeds to destruction. Thus, the fracture mechanism in any sintered bodies was ascribed only to brittle fracture.

In such a situation, it is an object of the present disclosure to provide a sintered body with improved impact resistance due to impact absorption through plastic deformation before brittle fracture for an impact exceeding the fracture resistance of the sintered body, and/or a method for producing the sintered body.

Solution to Problem

The present inventors have studied improvement in the impact resistance of ceramics. As a result, the present inventors have found that the impact resistance can be improved by a mechanism different from the improvement in fracture toughness.

The present invention is as described in the claims, and the gist of the present disclosure is as follows:

[1] A sintered body comprising: zirconia containing a stabilizer; and a region in which an impact mark is formed when an impact force is applied.

[2] The sintered body according to [1], wherein the impact mark is a depressed portion.

[3] The sintered body according to [1] or [2], wherein the stabilizer content is 3% or more by mole and 10% or less by mole.

[4] The sintered body according to any one of [1] to [3], wherein the stabilizer is two or more selected from the group consisting of yttria, calcia, magnesia and ceria.

[5] The sintered body according to any one of [1] to [4], wherein the stabilizer is yttria and ceria.

[6] The sintered body according to any one of [1] to [5], wherein the yttria content is less than 1.5% by mole.

[7] The sintered body according to any one of [1] to [6], wherein the ceria content is 2% or more by mole and 7.5% or less by mole.

[8] The sintered body according to any one of [1] to [7], containing a pigment.

[9] The sintered body according to [8], wherein the pigment is a metal oxide with a perovskite structure or a spinel structure.

[10] The sintered body according to [8] or [9], wherein the pigment is a manganese oxide with a perovskite structure or a spinel structure.

[11] The sintered body according to any one of [8] to [10], wherein the pigment content is 0.001% or more by mass.

[12] The sintered body according to any one of [1] to [11], comprising alumina.

[13] The sintered body according to any one of [1] to [12], comprising a region in which a ratio of an intensity of a powder X-ray diffraction peak of a (004) plane of a tetragonal phase to an intensity of a powder X-ray diffraction peak of a (220) plane of the tetragonal phase is more than 0 and 1.0 or less.

[14] The sintered body according to any one of [1] to [13], comprising a region in which a ratio of an intensity of a powder X-ray diffraction peak of a (004) plane of a tetragonal phase to an intensity of a powder X-ray diffraction peak of a (220) plane of the tetragonal phase is more than 1.0 and 10 or less when an impact force is applied.

[15] The sintered body according to any one of [1] to [14], wherein the sintered body has a Vickers hardness of 12 GPa or less.

[16] A member comprising the sintered body according to any one of [1] to [15].

Advantageous Effects of Invention

The present disclosure can provide a sintered body with improved impact resistance due to impact absorption through plastic deformation before brittle fracture for an impact exceeding the fracture resistance of the sintered body, and/or a method for producing the sintered body.

Brief Description of Drawings

[Fig. 1] Fig. 1 is a schematic view of a ball drop test using a Du Pont ball drop tester.

[Fig. 2] Fig. 2 is a schematic view of an example of the center of impact area (formation of a depressed portion) after the ball drop test.

[Fig. 3] Fig. 3 is a schematic view of an example of the vicinity of the center of impact area in a high-hardness sintered body after the ball drop test.

[Fig. 4] Fig. 4 is a schematic view of an example of the arrangement of a sample in the ball drop test.

[Fig. 5] Fig. 5 is a schematic view of a method for measuring the depth of an impact mark.

[Fig. 6(a)] Fig. 6(a) is a schematic view of an example of a fracture in the ball drop test.

[Fig. 6(b)] Fig. 6(b) is a schematic view of an example of no fracture in the ball drop test.

[Fig. 7] Fig. 7 shows the appearance of a sintered body according to Example 1-1 after a drop test.

[Fig. 8] Fig. 8 shows the appearance of an impact mark formed on the sintered body of Example 1-1 after the drop test (magnification: 20 times).

[Fig. 9] Fig. 9 shows the appearance of a sintered body according to Comparative Example 1-3 after the drop test (magnification: 20 times).

[Fig. 10] Fig. 10 shows the appearance of a sintered body according to Example 2-1 after the drop test (magnification: 20 times).

Description of Embodiments

A sintered body according to the present disclosure is described in the following embodiments.

A sintered body according to the present embodiment is a sintered body comprising: zirconia containing a stabilizer; and a region in which an impact mark is formed when an impact force is applied.

The sintered body according to the present embodiment is preferably a zirconia sintered body that contains zirconia containing a stabilizer and that preferably contains zirconia containing a stabilizer as a matrix (main phase). Containing the stabilizer, the sintered body according to the present embodiment can be regarded as a partially stabilized zirconia sintered body.

The sintered body according to the present embodiment has a region in which an impact mark is formed when an impact force is applied. One reason for improved impact resistance, that is, higher impact resistance of the sintered body according to the present embodiment may be that the region in which an impact mark is formed (hereinafter also referred to as a "plastic deformation region") has the function of absorbing and dispersing energy from an applied impact force. Thus, when an impact force is applied, at least plastic deformation before brittle fracture reduces brittle fracture and improves impact resistance.

The sintered body according to the present embodiment only needs to at least partly have a plastic deformation region (that is, a sintered body with a plastic deformation region) and may be composed mainly of the plastic deformation region or may be composed of the plastic deformation region.

The "impact force" is a force by which energy is transferred to a sintered body, and is particularly a dynamic external force, preferably an external force exceeding the fracture resistance of the sintered body, more preferably a dynamic external force exceeding the fracture resistance of the sintered body, or a dynamic external force by which elastic energy is transferred to the sintered body.

The phrase "when an impact force is applied", as used herein, refers to the application of energy to at least part of a sintered body, for example, dynamic application of energy to the sintered body due to contact between the sintered body and an object, such as contact between a falling sintered body and the ground or the like or contact between a falling object and the sintered body.

The term "impact mark", as used herein, refers to a mark formed by the application of an impact force to a sintered body, preferably a mark in the sintered body formed by the application of an impact force. In other words, an impact mark is a mark of plastic deformation in a sintered body and is a mark of plastic deformation before fracture. A specific impact mark may be a depressed portion or an uneven portion, or a depressed portion, at the center of impact area (described later), or a depressed portion in the application direction of an impact force.

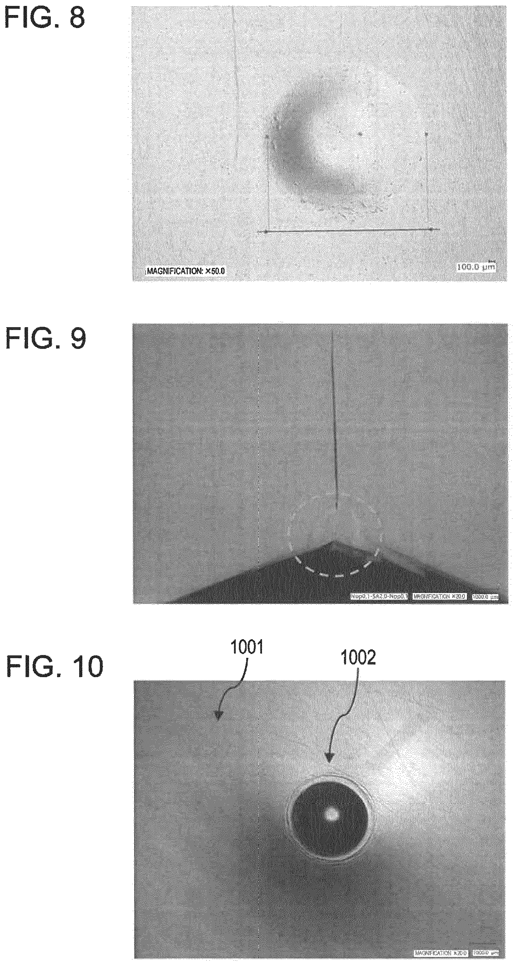

In the present embodiment, a plastic deformation region in a sintered body can be determined by applying an impact force to the sintered body by any method (for example, a dynamic external force that promotes fracture of the sintered body). A plastic deformation region in a sintered body can be determined by applying an impact force to the sintered body and checking for a mark of plastic deformation (particularly, a mark of deformation before fracture), such as a depressed portion or an uneven portion, as an impact mark in the sintered body. In the sintered body according to the present embodiment, an impact mark is formed by plastic deformation and may include a defect, such as a crack, subsequently formed (after the formation of the impact mark). On the other hand, after the application of an impact force, the absence of a plastic deformation region can be judged from the presence of only a defect, such as a crack, (that is, only a defect without an impact mark due to plastic deformation) or by the presence of only a deformation due to fracture as in Hertzian fracture (that is, only a deformation formed by the development of fracture of an initial crack or the like; a dotted circle in Fig. 9).

A preferred method for determining a plastic deformation region may be a ball drop test of dropping a 300-g falling weight from a drop height of 350 mm at room temperature using a Du Pont ball drop tester according to JIS K 5600 5-3 (hereinafter also referred to simply as a "ball drop test").

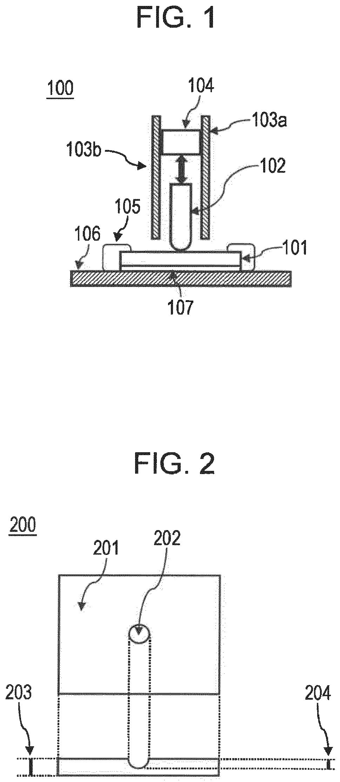

Fig. 1 is a schematic view of a ball drop test using a Du Pont ball drop tester. As illustrated in Fig. 1, in the ball drop test, a sample (101) is placed on a sample stage (106) of a cylindrical ball drop tester. A protective tape (107) is attached to the back surface of the sample (101). A fixing tape (105) is attached to the side surface of the sample (101). A falling weight is composed of a weight (104) and a die (punch: 102), and the die (102) is placed on the surface of the sample (101). The ball drop test may be performed by dropping a weight (104) from a height corresponding to the drop height from the die (the height indicated by the double-headed arrow in Fig. 1: 3\50 mm). The die (102) has a cylindrical shape with a spherical (hemispherical) tip. Thus, the same impact force can be applied to the sample as that of a rigid sphere of the size corresponding to the spherical surface falling from the drop height. The weight (104) is dropped along the guides (103a, 103b) of the Du Pont ball drop tester to apply a desired impact force to the sample (101) via the die (102). Instead of using the die, a rigid sphere with the same diameter as the spherical portion (hemispherical portion) of the die and with a mass of 300 g may be dropped onto the sample from a height corresponding to the drop height.

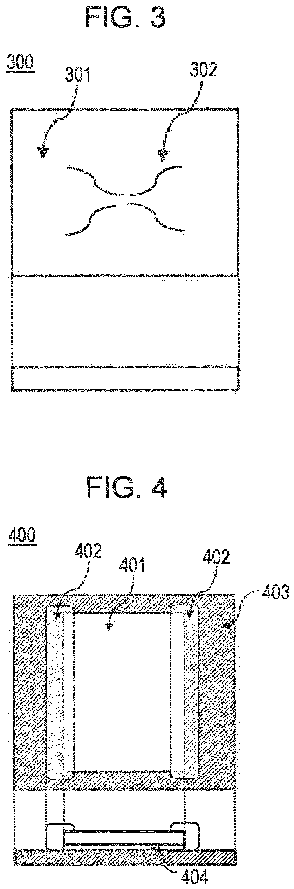

Fig. 2 is a schematic view of the appearance of the sintered body according to the present embodiment after the ball drop test. Fig. 2 shows that the sintered body according to the present embodiment has an impact mark in a region to which an impact force was applied with a falling weight (die) in the ball drop test (hereinafter also referred to as "the center of impact area"). The impact mark in Fig. 2 is a depressed portion formed near the center of impact area, and the plastic deformation region can be visually observed. Although not shown, a defect, such as a crack, may be present near the depressed portion. In contrast, Fig. 3 is a schematic view of the appearance of a known sintered body after the ball drop test. As illustrated in Fig. 3, the known sintered body has no impact mark at the center of impact area and has only a defect, such as a crack.

The presence or absence of a plastic deformation region may be determined by visual observation and/or by observation with an optical microscope, or by visual observation. The magnification for observation with an optical microscope may range from 1 to 100 times, preferably 10 to 30 times.

Although not shown, a known sintered body with high fracture toughness (for example, a sintered body with a fracture toughness value of more than 7 MPa·m$^{0.5}$ as measured by the SEPB method) has no change in appearance in the ball drop test and does not have the center of impact area. In this case, the presence or absence of the plastic deformation region can also be determined in the ball drop test by increasing the drop height until the center of impact area can be observed and by checking for an impact mark, such as a depressed portion, and a defect in the center of impact area observed. For the sintered body according to the present embodiment, however, the presence or absence of the plastic deformation region may be determined at a drop height of 350 mm in the ball drop test.

In the present embodiment, the ball drop test can be performed at room temperature (20°C to 30°C) using a Du Pont ball drop tester according to JIS K 5600 5-3. The ball drop test may be performed under the following conditions.

Falling weight: (shape) a spherical rigid sphere with a diameter of 6.35 mm or a cylindrical die with a spherical tip with a diameter of 6.35 mm (mass) 300 g

Drop height: 350 mm
Sample: a plate-like sintered body 40 mm in length x 30 mm in width x 2 mm in thickness with a surface roughness Ra of 0.02 $\mu$m or less on both surfaces

The sample is mounted by fixing a surface (a main surface 40 mm in length x 30 mm in width) of the sample to the sample stage of the ball drop tester with a double-sided tape to prevent scattering of pieces of the sample. A fixing tape (protective tape) is attached to a main surface of the sample opposite to the fixed surface in the longitudinal direction of the main surface to fix the sample (Fig. 4). The ball drop test may be performed on the fixed sample.

With respect to the depth of an impact mark formed in the ball drop test, for example, the maximum depth of the impact mark (204 in Fig. 2) relative to the thickness of the sintered body (203 in Fig. 2) may be more than 0 and 3.5 or less or 0.5 or more and 3 or less. The depth (204) of the impact mark (depressed portion) in Fig. 2 is emphasized.

In the present embodiment, the depth of the impact mark can be measured with a typical laser microscope (for example, VK-9500/VK-9510 manufactured by Keyence Corporation). The observation magnification may range from 10 to 50 times, or 20 times, and the laser wavelength may be 408 nm.

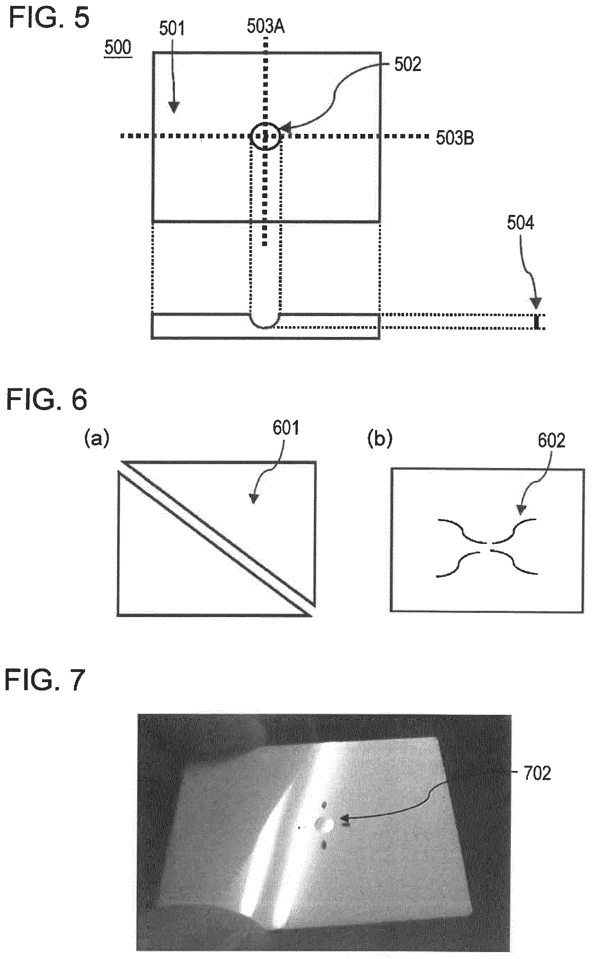

Fig. 5 is a schematic view of a method for measuring the depth of an impact mark. The length (L1) of the deepest portion in the Z-axis direction on a line profile (503A) passing through the center of the impact mark is measured. Likewise, the length (L2) of the deepest portion in the Z-axis direction on a line profile (503B) perpendicular to the above line profile is measured. The lengths of both deepest portions are averaged (= (L1 + L2)/2), and the averaged length may be taken as the depth (504) of the impact mark. The condition for measuring the length of the deepest portion may be 0.5 $\mu$m/step. Before the measurement, a standard sample with a known pattern length (for example, a patterned Si substrate) attached to the apparatus may be measured to ensure the analysis accuracy.

Such measurements of line profiles, the deepest portion in the Z-axis direction, and the like can be analyzed by image analysis using analysis software or the like provided with a laser microscope (for example, software name: VK-H1A9VK Analyzer Version 3.0.1.0).

Zirconia in the sintered body according to the present embodiment contains a stabilizer. The stabilizer only needs to contain an element with the function of stabilizing zirconia, preferably two or more selected from the group consisting of yttria ($Y_2O_3$), calcia (CaO), magnesia (MgO) and ceria ($CeO_2$), more preferably at least yttria, still more preferably yttria and at least one selected from the group consisting of calcia, magnesia and ceria, still more preferably yttria and ceria.

The stabilizer content is the ratio (% by mole) of the total of stabilizers on an oxide basis to the total of zirconia and the stabilizers on an oxide basis. The stabilizer content may be an amount at which zirconia is partially stabilized. For example, the stabilizer content of a sintered body composed of zirconia containing yttria and ceria (an yttria- and ceria-stabilized zirconia sintered body) can be determined as { ($Y_2O_3$ + $CeO_2$) / ($Y_2O_3$ + $CeO_2$ + $ZrO_2$)} x 100 (% by mole). The stabilizer content is preferably 3% or more by mole and 10% or less by mole, more preferably 4% or more by mole and 7.5% or less by mole, still more preferably 4.2% or more by mole and 6.2% or less by mole, still more preferably 4.5% or more by mole and 6.0% or less by mole, still more preferably 4.6% or more by mole and 5.5% or less by mole.

When yttria is contained as a stabilizer, the yttria content is preferably less than 1.5% by mole, more preferably 1.3% or less by mole, still more preferably 1.2% or less by mole. When ceria and yttria coexist, to facilitate the formation of a sintered body by a simple method, such as pressureless sintering, the yttria content is more than 0% by mole, preferably 0.5% or more by mole, more preferably 0.6% or more by mole, particularly preferably 0.9% or more by mole or even 1.0% or more by mole.

It is sufficient if the sintered body according to the present embodiment satisfies such a stabilizer content. When ceria is contained as a stabilizer, the ceria content is not particularly limited. The ceria content is, for example, 2% or more by mole and 7.5% or less by mole, 2.5% or more by mole and 6% or less by mole or 3% or more by mole and 5% or less by mole. When calcia is contained as a stabilizer, the calcia content may be 2% or more by mole and 7.5% or less by mole or 2.5% or more by mole and 6% or less by mole. When magnesia is contained as a stabilizer, the magnesia content may be 2% or more by mole and 7.5% or less by mole or 2% or more by mole and 6% or less by mole.

The sintered body according to the present embodiment preferably contains ceria and yttria as stabilizers, wherein the ceria content is preferably 2% or more by mole, 3% or more by mole or 3.5% or more by mole, and 6% or less by mole, 5.5% or less by mole or 4.5% or less by mole, and the yttria content is preferably 0.1% or more by mole, 0.5% or more by mole or 0.9% or more by mole, and less than 1.5% by mole, 1.3% or less by mole or 1.15% or less by mole.

A stabilizer content is the ratio (% by mole) of the corresponding stabilizer on an oxide basis to the total of zirconia and stabilizers on an oxide basis. For example, the yttria content of an yttria-stabilized zirconia is the ratio (% by mole) of yttria to the total of zirconia and yttria and can be calculated using $\{(Y_2O_3/(Y_2O_3 + ZrO_2))\} \times 100$ (% by mole). The ceria content of a ceria-stabilized zirconia is the ratio (% by mole) of ceria to the total of zirconia and ceria and can be calculated using $\{(CeO_2/(CeO_2 + ZrO_2))\} \times 100$ (% by mole). The yttria content of an yttria- and ceria-stabilized zirconia sintered body can be calculated using $\{Y_2O_3/(Y_2O_3 + CeO_2 + ZrO_2)\} \times 100$ (% by mole). In the present embodiment, the ceria is preferably composed of tetravalent cerium and more preferably does not contain trivalent cerium.

To facilitate the formation of an impact mark through plastic deformation, the ratio (mole ratio) of a stabilizing element other than yttrium (Y) to yttrium of the sintered body according to the present embodiment (hereinafter also referred to as an "S/Y ratio" and also referred to as a "Ce/Y ratio" or the like when the stabilizer other than yttrium is cerium (Ce) or the like) is preferably 1.2 or more and 5.0 or less, more preferably 1.4 or more and 4.5 or less, still more preferably 1.5 or more and 2.3 or less, still more preferably 1.6 or more and 2.0 or less.

The sintered body according to the present embodiment may contain a pigment. Such a sintered body has a color tone different from the original color tone of zirconia. In the present embodiment, the pigment only needs to contain an element with the function of coloring zirconia, preferably at least one of metal elements and lanthanoid rare-earth elements, more preferably at least one of transition metal elements and lanthanoid rare-earth elements, still more preferably at least one selected from the group consisting of iron (Fe), cobalt (Co), nickel (Ni), manganese (Mn), praseodymium (Pr), neodymium (Nd), europium (Eu), gadolinium (Gd), terbium (Tb), erbium (Er) and ytterbium (Tb), still more preferably at least one selected from the group consisting of iron, cobalt and manganese, particularly preferably manganese. In another embodiment, the sintered body according to the present embodiment preferably contains, as a pigment, at least one element selected from the group consisting of iron, cobalt, nickel and manganese and at least one element selected from the group consisting of praseodymium, neodymium, europium, gadolinium, terbium, erbium and ytterbium, more preferably at least one element selected from the group consisting of iron, cobalt and manganese and at least one element selected from the group consisting of praseodymium, neodymium, gadolinium, terbium and erbium.

The sintered body according to the present embodiment more preferably contains, as the pigment, a metal oxide with a perovskite structure or a spinel structure, still more preferably a transition metal oxide with the perovskite structure or the spinel structure, still more preferably a manganese oxide with the perovskite structure or the spinel structure.

The metal oxide with the perovskite structure may be an oxide represented by $ABO_3$, wherein A denotes at least one selected from the group consisting of calcium (Ca), strontium (Sr), barium (Ba), bismuth (Bi), yttrium (Y), lanthanum (La), neodymium (Nd), gadolinium (Gd), holmium (Ho), europium (Eu), erbium (Er), terbium (Tb), praseodymium (Pr) and ytterbium (Yb), and B denotes at least one selected from the group consisting of vanadium (V), chromium (Cr), manganese (Mn), iron (Fe), cobalt (Co), nickel (Ni) and aluminum (Al), and may preferably be an oxide represented by $ABO_3$, wherein A denotes at least one selected from the group consisting of lanthanum, neodymium, gadolinium, praseodymium and ytterbium, and B denotes at least one selected from the group consisting of manganese, iron, cobalt and nickel. More preferably, the metal oxide with the perovskite structure may be an oxide represented by $ABO_3$, wherein A denotes at least one selected from the group consisting of lanthanum, neodymium, gadolinium, praseodymium and ytterbium, and B denotes manganese. A specific metal oxide with the perovskite structure may be at least one oxide selected from the group consisting of $PrAlO_3$, $NdAlO_3$, $LaMnO_3$, $GaMnO_3$, $NdMnO_3$, $PrMnO_3$, $LaCoO_3$, $GdCoO_3$, $NdCoO_3$, $PrCoO_3$, $LaFeO_3$, $GdFeO_3$, $NdFeO_3$, $PrFeO_3$, $La(Co_{0.5}Mn_{0.5})O_3$, $Gd(Co_{0.5}Mn_{0.5})O_3$, $Nd(Co_{0.5}Mn_{0.5})O_3$, $Pr(Co_{0.5}Mn_{0.5})O_3$, $La(Fe_{0.5}Mn_{0.5})O_3$, $Gd(Fe_{0.5}Mn_{0.5})O_3$, $Nd(Fe_{0.5}Mn_{0.5})O_3$ and $Pr(Fe_{0.5}Mn_{0.5})O_3$.

The metal oxide with the spinel structure may be an oxide represented by $AB_2O_4$, wherein A and B independently denote at least one selected from the group consisting of calcium, strontium, barium, bismuth, yttrium, lanthanum, neodymium, gadolinium, holmium, europium, erbium, terbium, praseodymium, ytterbium, vanadium, chromium, manganese, iron, cobalt, nickel and aluminum, and may preferably be an oxide represented by $AB_2O_4$, wherein A and B independently denote at least one selected from the group consisting of lanthanum, neodymium, gadolinium, praseodymium, ytterbium, aluminum, manganese, iron, cobalt and nickel, or an oxide represented by $AB_2O_4$, wherein A and B independently denote at least one selected from the group consisting of lanthanum, neodymium, gadolinium, praseodymium, ytterbium, manganese, iron, cobalt and nickel. More preferably, the metal oxide with the spinel structure may be an oxide represented by $AB_2O_4$, wherein A and B independently denote at least one selected from the group consisting of lanthanum, neodymium, gadolinium, praseodymium, ytterbium, iron and manganese. A specific metal oxide with the spinel structure may be at least one selected from the group consisting of $CoAl_2O_4$, $Fe_3O_4$ and $Mn_3O_4$ (that is, $Fe^{2+}Fe^{3+}_2O_4$ and $Mn^{2+}Mn^{3+}_2O_4$), preferably at least one of $CoAl_2O_4$ and $Mn_3O_4$, preferably $Mn_3O_4$.

A particularly preferred pigment may be at least one oxide selected from the group consisting of $LaMnO_3$, $GdMnO_3$, $NdMnO_3$, $PrMnO_3$, $La(Co_{0.5}Mn_{0.5})O_3$, $Gd(Co_{0.5}Mn_{0.5})O_3$, $Nd(Co_{0.5}Mn_{0.5})O_3$, $Pr(Co_{0.5}Mn_{0.5})O_3$, $La(Fe_{0.5}Mn_{0.5})O_3$, $Gd(Fe_{0.5}Mn_{0.5})O_3$, $Nd(Fe_{0.5}Mn_{0.5})O_3$, $Pr(Fe_{0.5}Mn_{0.5})O_3$ and $Mn_3O_4$, more preferably at least one oxide selected from the group consisting of $LaMnO_3$, $GdMnO_3$, $NdMnO_3$, $PrMnO_3$, $La(Co_{0.5}Mn_{0.5})O_3$ and $Mn_3O_4$.

The sintered body according to the present embodiment with a lower pigment content is more easily plastically deformed. When a pigment is contained, the pigment content is therefore more than 0% by mass, preferably 0.001% or more by mass, more preferably 0.1% or more by mass, still more preferably 0.2% or more by mass. A sintered body with a plastic deformation region may have any pigment content. The upper limit of the pigment content is, for example, 5% or less by mass, less than 3% by mass, 2.5% or less by mass, 2.0% or less by mass, 1.5% or less by mass, 1.0% or less by mass or 0.7% or less by mass. The pigment content can be determined as the ratio of the total mass of pigments on an oxide basis to the mass of the sintered body on an oxide basis. Examples of the pigments on an oxide basis include $Nd_2O_3$ for neodymium, $La_2O_3$ for lanthanum, $Gd_2O_3$ for gadolinium, $Pr_6O_{11}$ for praseodymium and $CO_3O_4$ for cobalt. For example, when the sintered body according to the present embodiment contains a metal oxide with the perovskite structure as a pigment, and the remainder is zirconia containing yttria and ceria as stabilizers, the pigment content can be determined using $\{(ABO_3) / (ZrO_2 + Y_2O_3 + CeO_2 + ABO_3)\}$ x 100 (% by mass). When the sintered body according to the present embodiment contains a metal oxide with the spinel structure as a pigment, and the remainder is zirconia containing yttria and ceria as stabilizers, the pigment content can be determined using $\{(AB_2O_4) / (ZrO_2 + Y_2O_3 + CeO_2 + AB_2O_4)\}$ x 100 (% by mass). For the specific pigment content, when a sintered body contains alumina and a metal oxide with the perovskite structure, $LaMnO_3$, as a pigment, and the remainder is zirconia containing yttria and ceria as stabilizers, the pigment content can be determined using $\{(LaMnO_3)/(ZrO_2 + Y_2O_3 + CeO_2 + LaMnO_3 + Al_2O_3)\}$ x 100 (% by mass) .

The sintered body according to the present embodiment may contain alumina ($Al_2O_3$). This tends to improve mechanical characteristics, for example, static strength. The sintered body according to the present embodiment does not necessarily contain alumina and therefore has an alumina content of 0% or more by mass. When the sintered body according to the present embodiment contains alumina, the alumina content may be more than 0% by mass and less than 30% by mass, preferably more than 0% by mass and 20% or less by mass, more preferably 0.005% or more by mass and 10% or less by mass. The alumina content may be 0% or more by mass, more than 0% by mass, 0.5% or more by mass or 1% or more by mass, and 20% or less by mass, 17% or less by mass, 12% or less by mass, 10% or less by mass or 8% or less by mass. The alumina content may be determined as the mass ratio of aluminum in terms of $Al_2O_3$ to the total of zirconia, stabilizers on an oxide basis and aluminum in terms of $Al_2O_3$. For example, when zirconia contains yttria and ceria as stabilizers, the alumina content can be determined using $\{AL_2O_3/(ZrO_2 + Y_2O_3 + CeO_2 + Al_2O_3)\}$ x 100 (% by mass). The alumina content of a sintered body containing a pigment can be determined as the mass ratio of aluminum in terms of $Al_2O_3$ to the total of zirconia, stabilizers on an oxide basis and aluminum in terms of $Al_2O_3$. For example, when zirconia contains yttria and ceria as stabilizers, the alumina content can be determined using $\{Al_2O_3/(ZrO_2 + Y_2O_3 + CeO_2 + M_xO_y + Al_2O_3)\}$ x 100 (% by mass) .

Alumina ($Al_2O_3$) has a great influence on the mechanical characteristics of a sintered body and has little effect of coloring zirconia. Thus, in the present embodiment, the pigment does not include alumina, that is, aluminum that does not form a composite oxide with a metal element or the like.

The sintered body according to the present embodiment is preferably a sintered body that contains zirconia containing a stabilizer and that contains zirconia containing a stabilizer as a matrix (main phase), that is, a zirconia sintered body or a partially stabilized zirconia sintered body. When zirconia containing a stabilizer is a matrix (main phase), the mass ratio of the zirconia containing the stabilizer to the sintered body (hereinafter also referred to as the "zirconia content") is 70% or more by mass, preferably 80% or more by mass, more preferably more than 90% by mass. The sintered body has a zirconia content of 100% or less by mass, and a sintered body composed only of zirconia containing a stabilizer has a zirconia mass ratio of 100% by mass. The zirconia content can be determined as the ratio of the total mass of zirconia and stabilizers on an oxide basis to the mass of the sintered body on an oxide basis. For example, when the sintered body contains alumina, and the remainder is zirconia containing yttria and ceria as stabilizers, the content of the zirconia containing the stabilizers can be determined using $\{(ZrO_2 + Y_2O_3 + CeO_2)/(ZrO_2 + Y_2O_3 + CeO_2 + Al_2O_3)\}$ x 100 (% by mass). When the sintered body contains a pigment, the content can be determined using $\{(ZrO_2 + Y_2O_3 + CeO_2) / (ZrO_2 + Y_2O_3 + CeO_2 + M_xO_y + Al_2O_3)\}$ x 100 (% by mass) .

Although the sintered body according to the present embodiment may contain incidental impurities, such as hafnia ($HfO_2$), the sintered body preferably does not contain materials other than stabilizers, zirconia, alumina, optional pigments and incidental impurities. In the present embodiment, each component content and a value depending on the composition, such as the density, can be calculated by regarding hafnia ($HfO_2$) as zirconia ($ZrO_2$).

The sintered body according to the present embodiment preferably has a high density and more preferably has a density corresponding to a relative density of 98% or more. In particular, the density tends to decrease as the alumina content increases. For example, when the alumina content is 0% or more by mass and 10% or less by mass, the actual density may have a lower limit of 5.85 g/cm³ or more or 5.90 g/cm³ or more and an upper limit of 6.20 g/cm³ or less, 6.10 g/cm³ or less or even 6.00 g/cm³ or less. When the alumina content is more than 10% by mass and 20% or less by mass, the actual density may be 5.30 g/cm³ or more and less than 5.85 g/cm³. When the alumina content is more than 20% by mass and less than 30% by mass, the actual density may be 5.20 g/cm³ or more and less than 5.30 g/cm³.

In the present embodiment, the actual density can be determined using the Archimedes' principle and is the mass determined by mass measurement relative to the volume determined using the Archimedes' principle.

The crystal phase of zirconia in the sintered body according to the present embodiment preferably contains at least a tetragonal phase and may be composed of a tetragonal phase and at least one of a cubic phase and a monoclinic phase.

The sintered body according to the present embodiment preferably has a region in which the ratio of the intensity of a powder X-ray diffraction peak of a (004) plane of a tetragonal phase to the intensity of a powder X-ray diffraction peak of a (220) plane of the tetragonal phase (hereinafter also referred to as "$I_{(004)/(220)}$") is more than 0 and 1.0 or less (hereinafter also referred to as a "random orientation region") and is more preferably composed of the random orientation region. The (220) plane of the tetragonal phase (hereinafter also referred to as "$T_{220}$") and the (004) plane of the tetragonal phase (hereinafter also referred to as "$T_{004}$") are crystal planes perpendicular to each other. A region with such $I_{(004)/(220)}$ is probably a sufficient condition for plastic deformation to occur when an impact force is applied. $I_{(004)/(220)}$ in the random orientation region is preferably 0.1 or more and 0.7 or less, more preferably 0.2 or more and 0.6 or less.

When the sintered body according to the present embodiment absorbs or disperses energy from an applied impact force, a crystalline orientation change may occur in the plastic deformation region. For example, when an impact force is applied, the crystalline orientation of a plastic deformation region may be increased. Furthermore, when an impact force is applied (after the impact force is applied), there may be a region in which the intensity of a powder X-ray diffraction peak of $T_{004}$ relative to the intensity of a powder X-ray diffraction peak of $T_{220}$ is more than 1.0 and 10 or less (hereinafter also referred to as a "highly oriented region"). $I_{(004)/(220)}$ in the highly oriented region is preferably 1.5 or more and 8.0 or less, more preferably 3.0 or more and 5.0 or less.

In the present embodiment, a powder X-ray diffraction pattern (an X-ray diffraction pattern) of a sintered body can be measured with a typical crystallinity analysis X-ray diffractometer (for example, apparatus name: X'pert PRO MPD manufactured by Spectris Co., Ltd.).

The measurement conditions may be as follows:

Radiation source: CuK$\alpha$ radiation ($\lambda$ = 1.5405 angstroms)
Tube voltage: 45 kV
Tube current: 40 mA
High-speed detector: X'Celerator + Ni filter
Micro-optical system: monocapillary diameter 0.1 mm
Measurement angle: 70 to 80 degrees
Goniometer: radius 240 mm

In the measurement, the diffraction intensity of $T_{004}$ is determined as the diffraction intensity (integrated intensity) of an XRD peak with a peak top at $2\theta = 72.5 \pm 1$ degrees, and the diffraction intensity of $T_{220}$ is determined as the diffraction intensity (integrated intensity) of an XRD peak with a peak top at $2\theta = 74 \pm 1$ degrees. The shape of the sintered body according to the present embodiment may be at least one selected from the group consisting of spherical, approximately spherical, elliptical, discoidal, cylindrical, cubic, rectangular parallelepiped, polyhedral and approximately polyhedral. Furthermore, any shape may be used to achieve the desired purpose for various applications.

The sintered body according to the present embodiment preferably has a ball drop strength of 1 J or more, more preferably 1.5 J or more. The ball drop strength is a measure of impact resistance, and a higher ball drop strength indicates higher impact resistance. The sintered body has a ball drop strength of 10 J or less, 5 J or less or 4 J or less, for example.

The ball drop strength in the present embodiment is the energy given to the sintered body by a falling weight when the falling weight is dropped from a predetermined drop height onto the sintered body and destroys the sintered body. The ball drop strength can be calculated using the following formula and is preferably a value for a sample thickness of 2 mm.

$$\text{Ball drop strength (J)} = \text{mass of falling weight (g)} \times$$
$$\text{drop height (mm)} \times \text{gravity acceleration (m/s}^2)$$

The gravity acceleration may be 9.8 m/s$^2$.

The ball drop strength can be measured by the same method as in the ball drop test except that the drop height is the following height.

Drop height: 50 to 500 mm

Fracture can be identified from a sample broken into two or more pieces (Fig. 6A). A crack that does not extend from one end to the other end (Fig. 6B) indicates no fracture. In the case of no fracture at a specific drop height in the ball drop test, visual observation may be continued in the same manner in the ball drop test while increasing the drop height to 500 mm in increments of 50 mm until fracture occurs. In the present embodiment, for convenience, a sample without fracture at a drop height of 500 mm in the ball drop test is considered to have a ball drop strength of > 5 J (more than 5 J).

The impact resistance of the sintered body according to the present embodiment is preferably improved through plastic deformation rather than through improved hardness. To facilitate plastic deformation, the sintered body according to the present embodiment preferably has a Vickers hardness (Hv) of 12 GPa or less, more preferably 11 GPa or less, still more preferably 10 GPa or less. The Vickers hardness may be 5 GPa or more, 7 GPa or more or 8 GPa or more.

In the present embodiment, the Vickers hardness can be measured by a method according to JIS R1610: 2003. The measurement conditions for the Vickers hardness may be as follows:

Sample: (sample thickness) 1.5 ± 0.5 mm (measurement surface roughness) Ra ≤ 0.02 μm
Measurement load: 10 kgf

The measurement can be performed with a typical Vickers tester (for example, MV-1 manufactured by Matsuzawa Co., Ltd.) equipped with a square pyramidal diamond indenter. In the measurement, an indenter is statically pressed onto the surface of a sample, and the diagonal length of an indentation mark formed on the surface of the sample is visually measured. The Vickers hardness can be calculated from the diagonal length using the following formula.

$$Hv = F/\{d^2/2\sin(\alpha/2)\}$$

In this formula, Hv denotes the Vickers hardness (GPa), F denotes the measurement load (10 kgf), d denotes the diagonal length of an indentation mark (mm), and α denotes the angle between opposite faces of the indenter (136 degrees).

A measure of the fracture resistance of the sintered body in the present embodiment may be a fracture toughness value. The fracture toughness value refers to a fracture toughness value (MPa·m$^{0.5}$) measured by a method based on the SEPB method specified in JIS R 1607. The fracture toughness value may be measured at a span of 30 mm using a columnar sintered body sample 4 mm in width and 3 mm in thickness. The fracture toughness value of the sintered body according to the present embodiment may be the average value of 10 measurements. JIS R 1607 specifies two methods for measuring fracture toughness: the IF method and the SEPB method. The IF method is a simplified measurement method and has large variations in measured values. Thus, absolute fracture toughness values in the present embodiment cannot be compared with absolute fracture toughness values measured by the IF method.

The sintered body according to the present embodiment may have any color tone. For the sintered body containing no pigment, the lightness L* in the CIE1976 (L*a*b*) color space may be 80 or more, 85 or more or even 90 or more. The upper limit of the lightness L* is 100 or less.

The lightness L* can be measured by a method according to JIS Z 8722 using a typical spectrophotometer (for example, CM-700d manufactured by Konica Minolta, Inc.). The measurement conditions for lightness L* are described below as an example. The measurement preferably uses a black plate as the background (black background measurement).

Light source: F2 light source
Viewing angle: 10 degrees
Measurement mode: SCI

The color tone may be evaluated in a discoidal sintered body with a diameter of 20 mm and a thickness of 2.7 mm as a sample. The surface to be measured is mirror-polished (Ra ≤ 0.02 μm). The effective area to evaluate the color tone may have a diameter of 10 mm.

In the sintered body according to the present embodiment, particularly the sintered body containing no pigment preferably has the lightness L*. In such a case, the chroma a* and b* tend to decrease. For example, the chroma a* and b* of the sintered body according to the present embodiment may be -6 ≤ a* ≤ -2, and 10 ≤ b* ≤ 30, respectively.

For the color tone of the sintered body according to the present embodiment containing a pigment, L* may be 0 or more and 90 or less, a* may be -5 or more and 15 or less, and b* may be -1 or more and 40 or less. Furthermore, when the sintered body according to the present embodiment exhibits a black color (that is, a black sintered body), the sintered body may have the following color tone.

10 ≤ L* < 60, -2 ≤ a* ≤ 2, and -2 ≤ b* ≤ 2 or
0 ≤ L* < 10, -20 ≤ a* ≤ 20, and -20 ≤ b* ≤ 20

The sintered body according to the present embodiment can be applied to known sintered bodies, particularly zirconia sintered bodies, such as structural materials, optical materials, and dental materials, and can be used as members requiring relatively high impact resistance, such as covers for ornaments, clocks and watches, cases and other accessories, and exterior members for portable electronic devices, such as mobile phones.

More preferred embodiments include the following embodiments.

(1) A sintered body that contains yttria, at least one stabilizer selected from the group consisting of calcia, magnesia and ceria, and the remainder composed of zirconia, wherein the stabilizer content is 2% or more by mole and 7.5% or less by mole, the yttria content is more than 0% by mole and less than 1.5% by mole, and the sintered body has a region in which the ratio of the intensity of a powder X-ray diffraction peak of a (004) plane of a tetragonal phase to the intensity of a powder X-ray diffraction peak of a (220) plane of the tetragonal phase is more than 0 and 1.0 or less.
(2) The sintered body according to (1), wherein the stabilizer is ceria.
(3) The sintered body according to (1) or (2), wherein the total of the stabilizer content and the yttria content is 4% or more by mole and 7.5% or less by mole.
(4) The sintered body according to any one of (1) to (3), containing at least one pigment selected from the group consisting of iron (Fe), cobalt (Co), nickel (Ni), manganese (Mn), praseodymium (Pr), neodymium (Nd), europium (Eu), gadolinium (Gd), terbium (Tb), erbium (Er) and ytterbium (Tb).
(5) The sintered body according to (4), wherein the pigment is an oxide with a perovskite structure or a spinel structure.
(6) The sintered body according to (4) or (5), wherein the pigment content is more than 0% by mass and 5% or less by mass.
(7) The sintered body according to any one of (1) to (6), wherein the sintered body is composed of a region in which the ratio of the intensity of a powder X-ray diffraction peak of a (004) plane of a tetragonal phase to the intensity of a powder X-ray diffraction peak of a (220) plane of the tetragonal phase is more than 0 and 1.0 or less.

<Other Embodiments>

Another embodiment of the present disclosure is a sintered body characterized by having a region in which an impact mark is formed when an impact force is applied.

Another embodiment of the present disclosure is a sintered body characterized in that an impact mark is formed when an impact force is applied.

Another embodiment of the present disclosure is a sintered body characterized in that a depressed portion is formed in a ball drop test in which a 300-g falling weight is dropped from a drop height of 350 mm at room temperature using a Du Pont ball drop tester according to JIS K 5600 5-3.

Another embodiment of the present disclosure is a sintered body that has a region in which the ratio of the intensity of a powder X-ray diffraction peak of a (004) plane of a tetragonal phase to the intensity of a powder X-ray diffraction peak of a (220) plane of the tetragonal phase is more than 0 and 1.0 or less and that, after the application of an impact force, has a region in which the ratio of the intensity of the powder X-ray diffraction peak of the (004) plane of the tetragonal phase to the intensity of the powder X-ray diffraction peak of the (220) plane of the tetragonal phase is more than 1.0 and 10 or less.

In these embodiments, the sintered body is preferably a zirconia sintered body, more preferably a partially stabilized zirconia sintered body, still more preferably an yttria- and ceria-stabilized zirconia sintered body, still more preferably an yttria- and ceria-stabilized zirconia sintered body with an yttria content of 1.0% or more by mole and less than 1.5% by mole.

In another embodiment, the sintered body is preferably a zirconia sintered body containing a pigment, more preferably a partially stabilized zirconia sintered body, still more preferably an yttria- and ceria-stabilized zirconia sintered body containing a pigment, still more preferably an yttria- and ceria-stabilized zirconia sintered body containing a pigment and having an yttria content of 1.0% or more by mole and less than 1.5% by mole.

A method for producing the sintered body according to the present embodiment is described below.

The sintered body according to the present embodiment may be produced by any method, provided that the sintered body satisfies the above requirements. An example of a method for producing the sintered body according to the present embodiment may be a production method including the step of sintering a green body containing two or more stabilizer sources and zirconia.

The green body to be subjected to the above step (hereinafter also referred to as a "sintering step") is a green body (green compact) containing two or more stabilizer sources and zirconia.

The stabilizer sources only need to contain an element that becomes a stabilizer by sintering and to be a compound containing at least one element selected from the group consisting of yttria, calcia, magnesia, ceria and their precursors yttrium (Y), calcium (Ca), magnesium (Mg) and cerium (Ce) (when the stabilizer is yttria, the stabilizer source is hereinafter also referred to as an "yttria source", and so on). The stabilizer source is preferably a compound containing at least one element of yttria and ceria and their precursors yttrium and cerium, more preferably at least one of compounds containing yttria and yttrium and at least one of compounds containing ceria and cerium.

The yttria source may be at least one of yttria and an yttrium compound serving as a precursor of yttria, for example, at least one selected from the group consisting of yttrium chloride, yttria and yttrium carbonate, preferably yttria.

The ceria source may be at least one of ceria and a cerium compound serving as a precursor of ceria, for example, at least one selected from the group consisting of cerium chloride, ceria and cerium carbonate, preferably cerium chloride.

The calcia source may be at least one of calcia and an calcium compound serving as a precursor of calcia, for example, at least one selected from the group consisting of calcium chloride, calcia, calcium carbonate and calcium hydrogen carbonate, preferably calcia.

The magnesia source may be at least one of magnesia and an magnesium compound serving as a precursor of magnesia, for example, at least one selected from the group consisting of magnesium chloride, magnesia, magnesium carbonate and magnesium hydrogen carbonate, preferably magnesia.

The stabilizer source content of the green body may be the same as the stabilizer content of the desired sintered body.

For a sintered body containing alumina, the green body may contain an alumina source. The alumina source is at least one of alumina ($Al_2O_3$) and a compound containing aluminum (Al) serving as a precursor of alumina, for example, at least one selected from the group consisting of aluminum chloride, aluminum sulfate, aluminum nitrate, aluminum hydroxide and alumina, preferably alumina.

The alumina source content of the green body may be the same as the alumina content of the desired sintered body.

The green body may contain a binder to improve shape stability. The binder may be an organic binder used to form ceramics, for example, at least one selected from the group consisting of acrylic resins, polyolefin resins, waxes and plasticizers. The binder content may range from 25% to 65% by volume of the green body.

The green body may have any shape depending on the purpose in consideration of shrinkage due to sintering, for example, at least one selected from the group consisting of spherical, approximately spherical, elliptical, discoidal, cylindrical, cubic, rectangular parallelepiped, polyhedral and approximately polyhedral.

The green body may be produced by any method, for example, by mixing and forming zirconia, a stabilizer source and optionally at least one of a pigment source and an alumina source by any method. Zirconia containing a stabilizer may be used instead of or in addition to the zirconia and the stabilizer source.

When zirconia containing a stabilizer is used as the zirconia, the stabilizer may be added to the zirconia by any method. For example, a hydrous zirconia sol may be mixed with a stabilizer source with a desired stabilizer content, drying and calcining the mixture, and washing the mixture with water.

For a sintered body containing a pigment, the green body may contain a pigment source. The pigment source may be at least one of a pigment and a precursor thereof. The precursor of the pigment may be a compound containing at least one of metal elements and lanthanoid rare-earth elements, for example, at least one selected from the group consisting of oxides, hydroxides, oxyhydroxides, carbonates, oxalates, sulfates, acetates, nitrates, chlorides, fluorides, bromides and iodides of at least one of metals and lanthanoid rare-earth elements, preferably at least one selected from the group consisting of oxides, hydroxides, oxyhydroxides and carbonates of at least one of transition metals and lanthanoid rare-earth elements. A specific precursor of a pigment may be two or more selected from the group consisting of manganese oxide, iron oxide, cobalt oxide, lanthanum oxide, neodymium oxide, gadolinium oxide and praseodymium oxide.

When the pigment is a metal oxide with the perovskite structure or the spinel structure, the pigment can be produced by mixing at least one selected from the group consisting of oxides, hydroxides, oxyhydroxides, carbonates, oxalates, sulfates, acetates, nitrates, chlorides, fluorides, bromides and iodides of transition metals with at least one selected from the group consisting of oxides, hydroxides, oxyhydroxides, carbonates, oxalates, sulfates, acetates, nitrates, chlorides, fluorides, bromides and iodides of transition metals and by firing the mixture at 1200°C to 1500°C in air.

The pigment source content of the green body may be the same as the pigment content of the desired sintered body.

The mixing method may be any mixing method, preferably at least one of dry mixing and wet mixing, more preferably wet mixing, still more preferably wet mixing in a ball mill.

The forming method may be a known forming method, preferably at least one selected from the group consisting of uniaxial pressing, isostatic pressing, injection molding, extrusion, tumbling granulation and slip casting, more preferably at least one of uniaxial pressing and isostatic pressing, still more preferably at least one of cold isostatic pressing and uniaxial pressing (powder press forming).

In the sintering step, the green body is sintered to form a sintered body. The sintering method may be any sintering method, for example, a known sintering method, such as pressureless sintering, pressure sintering or vacuum sintering. A preferred sintering method may be pressureless sintering, and for ease of operation the sintering method is preferably pressureless sintering alone. Thus, the sintered body according to the present embodiment can be produced as a pressureless sintered body. Pressureless sintering is a method of sintering a green body (or a calcined body) by simple heating without applying an external force to the green body.

The sintering temperature in pressureless sintering may be 1250°C or more and 1600°C or less, preferably 1300°C or more and 1580°C or less, or 1300°C or more and 1560°C or less. The sintering atmosphere may be at least one of the air atmosphere and the oxygen atmosphere, preferably the air atmosphere. Thus, when ceria is contained as a stabilizer, the ceria is composed of tetravalent cerium ($Ce^{4+}$).

EXAMPLES

The present embodiment is further described in the following examples. However, the present embodiment is not limited to these examples.

(Identifying Plastic Deformation Region)

The presence or absence of a plastic deformation region of a sintered body sample was determined in a ball drop test using a Du Pont ball drop tester according to JIS K 5600 5-3 (apparatus name: H-50 manufactured by Toyo Seiki Seisaku-Sho, Ltd.). Test conditions are as follows:

Falling weight: (shape) a spherical rigid sphere with a diameter of 6.35 mm, that is, a cylindrical die with a height 10 mm having a spherical tip with a diameter of 6.35 mm
(mass) 300 g, that is, a rectangular parallelepiped weight with a mass of 300 g made of stainless steel 80 mm in width x 20 mm in thickness x 30 mm in height Drop height: 350 mm
Sample: a plate-like sintered body 40 mm in length x 30 mm in width x 2 mm in thickness with a surface roughness Ra ≤ 0.02 μm on both surfaces (surfaces 40 mm in length x 30 mm in width, main surfaces)

The sample was mounted by fixing a surface (a surface 40 mm in length x 30 mm in width) of the sample to the sample stage of the ball drop tester with a double-sided tape to prevent scattering of pieces of the sample. A tape was attached to a surface of the sample opposite to the fixed surface in the longitudinal direction of the surface to fix the sample). The die was placed such that the falling weight could drop near the center of the fixed sample in the ball drop test.

(Measurement of Ball Drop Strength)

The ball drop strength was measured in the same manner as in the ball drop test for identifying the plastic deformation region except that the drop height was changed. More specifically, the state of the sample after dropping the falling weight was visually observed, and the ball drop strength at the drop height at which the sample was broken was calculated using the following formula.

$$\text{Ball drop strength (J)} = \text{mass of falling weight (g)} \times$$

$$\text{drop height (mm)} \times \text{gravity acceleration (9.8 m/s}^2)$$

Fracture was judged from a sample broken into two or more pieces. A sample having extremely small broken pieces, such as chipping, but maintaining its plate-like shape was not regarded as fracture. In the case of no fracture at a specific drop height in the ball drop test, the drop height was increased to 500 mm in increments of 50 mm until fracture occurred in the ball drop test. For convenience, a sample without fracture at a drop height of 500 mm in the ball drop test was considered to have a ball drop strength of > 5 J (more than 5 J).

(Depth of Impact Mark)

The depth of an impact mark was measured with a typical laser microscope (apparatus name: VK-9500/VK-9510 manufactured by Keyence Corporation) at an observation magnification of 20 times. The length (L1) of the deepest portion in the Z-axis direction on a line profile passing through the center of the impact mark was measured at 0.5 μm/step. Likewise, the length (L2) of the deepest portion in the Z-axis direction on a line profile perpendicular to the above line profile was then measured. The lengths of both deepest portions were averaged (= (L1 + L2)/2), and the averaged length was taken as the depth of the impact mark.

(Vickers Hardness)

The Vickers hardness was measured with a typical Vickers tester (apparatus name: MV-1 manufactured by Matsuzawa Co., Ltd.) equipped with a square pyramidal diamond indenter.

The indenter was statically pressed onto the surface of the sample, and the diagonal length of an indentation mark formed on the surface of the sample was visually measured. The Vickers hardness (GPa) was calculated from the diagonal length using the formula described above.

(Density)

The actual density of a sintered body sample was determined as the ratio ($g/cm^3$) of the mass measured by the mass measurement to the volume measured using the Archimedes' principle.

($I_{(004)/(220)}$)

The diffraction intensities of the crystal phases $T_{004}$ and $T_{220}$ of a sintered body sample were measured by micro-XRD (apparatus name: X'pert PRO MPD manufactured by Spectris Co., Ltd.). The measurement conditions are as follows:

Radiation source: CuK$\alpha$ radiation ($\lambda$ = 1.5405 angstroms)
Tube voltage: 45 kV
Tube current: 40 mA
High-speed detector: X'Celerator + Ni filter
Micro-optical system: monocapillary diameter 0.1 mm
Measurement angle: 70 to 80 degrees
Goniometer: radius 240 mm

Micro-XRD measurement was performed on the center of impact area and on a portion other than the center of impact area in a sample before the test and after the observation of a plastic deformation region. $I_{(004)/(220)}$ was calculated using the following formula.

$$I_{(004)/(220)} = (\text{diffraction intensity of } T_{004})/(\text{diffraction intensity of } T_{220})$$

(Measurement of Color Tone)

The color tone of a sintered body sample was measured by a method according to JIS Z 8722. A typical spectrophotometer (apparatus name: CM-700d manufactured by Konica Minolta, Inc.) was used for the measurement, and black background measurement was performed using a black plate as the background. The measurement conditions are as follows:

Light source: F2 light source
Viewing angle: 10 degrees
Measurement mode: SCI

A discoidal sintered body sample with a diameter of 20 mm and a thickness of 2.7 mm was used. A surface of the sintered body sample was mirror-polished (Ra $\leq$ 0.02 $\mu$m) and was used as an evaluation surface to evaluate the color tone. The effective area to evaluate the color tone had a diameter of 10 mm.

Example 1-1

Aqueous zirconium oxychloride was subjected to hydrolysis reaction to prepare a hydrous zirconia sol. Each of yttria and cerium chloride heptahydrate was mixed with the hydrous zirconia sol at an yttria concentration of 1.1% by mole and a ceria concentration of 3.4% by mole. After the mixing, the mixture was dried in air and was calcined in air at 1155°C for 2 hours to prepare an yttria- and ceria-stabilized zirconia calcined powder. The calcined powder was washed with pure water and was dried to prepare a zirconia powder composed of yttria- and ceria-stabilized zirconia with an yttria content of 1.1% by mole and a ceria content of 3.4% by mole.

The powder and an α-alumina powder with an alumina content of 5% by mass were added to pure water to prepare a slurry, and the slurry was ground and mixed for 18 hours in a ball mill using zirconia balls with a diameter of 10 mm as a grinding medium. The ground and mixed slurry was dried to prepare a zirconia powder according to the present example composed of yttria- and ceria-stabilized zirconia containing 5% by mass of alumina and the remainder with an yttria content of 1.1% by mole and a ceria content of 3.4% by mole.

The powder was granulated into powder granules and was put into a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body (green compact). The green body was sintered under the following conditions to prepare a sintered body according to the present example composed of yttria- and ceria-stabilized zirconia containing 5% by mass of alumina and the remainder with an yttria content of 1.1% by mole and a ceria content of 3.4% by mole. The sintering conditions are as follows:

Sintering method: pressureless sintering
Sintering atmosphere: in air
Sintering temperature: 1550°C
Sintering time: 2 hours

Example 1-2

A zirconia powder according to the present example composed of yttria- and ceria-stabilized zirconia containing 5% by mass of alumina and the remainder with an yttria content of 1.1% by mole and a ceria content of 3.9% by mole was prepared in the same manner as in Example 1-1 except that cerium chloride heptahydrate was added to and mixed with a hydrous zirconia sol such that the ceria concentration was 3.9% by mole.

A sintered body according to the present example composed of yttria- and ceria-stabilized zirconia containing 5% by mass of alumina and the remainder with an yttria content of 1.1% by mole and a ceria content of 3.9% by mole was prepared in the same manner as in Example 1-1 except that the prepared zirconia powder was used.

Example 1-3

A zirconia powder according to the present example composed of yttria- and ceria-stabilized zirconia containing 5% by mass of alumina and the remainder with an yttria content of 1.1% by mole and a ceria content of 5.0% by mole was prepared in the same manner as in Example 1-1 except that cerium chloride heptahydrate was added to and mixed with a hydrous zirconia sol such that the ceria concentration was 5.0% by mole.

A sintered body according to the present example composed of yttria- and ceria-stabilized zirconia containing 5% by mass of alumina and the remainder with an yttria content of 1.1% by mole and a ceria content of 5.0% by mole was prepared in the same manner as in Example 1-1 except that the prepared zirconia powder was used.

Example 1-4

A zirconia powder according to the present example composed of yttria- and ceria-stabilized zirconia containing 5% by mass of alumina and the remainder with an yttria content of 0.7% by mole and a ceria content of 5.0% by mole was prepared in the same manner as in Example 1-1 except that each of yttria and cerium chloride heptahydrate was added to and mixed with a hydrous zirconia sol such that the yttria concentration was 0.7% by mole and the ceria concentration was 5.0% by mole.

A sintered body according to the present example composed of yttria- and ceria-stabilized zirconia containing 5% by mass of alumina and the remainder with an yttria content of 0.7% by mole and a ceria content of 5.0% by mole was prepared in the same manner as in Example 1-1 except that the prepared zirconia powder was used.

Example 1-5

A zirconia powder according to the present example composed of yttria- and ceria-stabilized zirconia containing 5% by mass of alumina and the remainder with an yttria content of 1.0% by mole and a ceria content of 3.6% by mole was prepared in the same manner as in Example 1-1 except that each of yttria and cerium chloride heptahydrate was added to and mixed with a hydrous zirconia sol such that the yttria concentration was 1.0% by mole and the ceria concentration was 3.6% by mole.

A sintered body according to the present example composed of yttria- and ceria-stabilized zirconia containing 5% by mass of alumina and the remainder with an yttria content of 1.0% by mole and a ceria content of 3.6% by mole was prepared in the same manner as in Example 1-1 except that the prepared zirconia powder was used.

Comparative Example 1-1

A zirconia powder according to the present comparative example composed of yttria- and ceria-stabilized zirconia containing 5% by mass of alumina and the remainder with an yttria content of 1.5% by mole and a ceria content of 3.4% by mole was prepared in the same manner as in Example 1-1 except that yttria was added to and mixed with a hydrous zirconia sol such that the yttria concentration was 1.5% by mole.

A sintered body according to the present comparative example composed of yttria- and ceria-stabilized zirconia containing 5% by mass of alumina and the remainder with an yttria content of 1.5% by mole and a ceria content of 3.4% by mole was prepared in the same manner as in Example 1-1 except that the prepared zirconia powder was used.

Comparative Example 1-2

A zirconia powder according to the present comparative example composed of yttria- and ceria-stabilized zirconia containing 5% by mass of alumina and the remainder with an yttria content of 2.0% by mole and a ceria content of 3.9% by mole was prepared in the same manner as in Example 1-1 except that each of yttria and cerium chloride heptahydrate was added to and mixed with a hydrous zirconia sol such that the yttria concentration was 2.0% by mole and the ceria concentration was 3.9% by mole.

A sintered body according to the present comparative example composed of yttria- and ceria-stabilized zirconia containing 5% by mass of alumina and the remainder with an yttria content of 2.0% by mole and a ceria content of 3.9% by mole was prepared in the same manner as in Example 1-1 except that the prepared zirconia powder was used.

Comparative Example 1-3

A zirconia powder according to the present comparative example composed of yttria- and ceria-stabilized zirconia containing 5% by mass of alumina and the remainder with an yttria content of 3.0% by mole and a ceria content of 3.9% by mole was prepared in the same manner as in Example 1-1 except that each of yttria and cerium chloride heptahydrate was added to and mixed with a hydrous zirconia sol such that the yttria concentration was 3.0% by mole and the ceria concentration was 3.9% by mole.

A sintered body according to the present comparative example composed of yttria- and ceria-stabilized zirconia containing 5% by mass of alumina and the remainder with an yttria content of 3.0% by mole and a ceria content of 3.9% by mole was prepared in the same manner as in Example 1-1 except that the prepared zirconia powder was used.

Comparative Example 1-4

A zirconia powder according to the present comparative example composed of ceria-stabilized zirconia containing 5% by mass of alumina and the remainder with a ceria content of 3.4% by mole was prepared in the same manner as in Example 1-1 except that yttria was not added to the hydrous zirconia sol.

A sintered body according to the present comparative example composed of ceria-stabilized zirconia containing 5% by mass of alumina and the remainder with a ceria content of 3.4% by mole was prepared in the same manner as in Example 1-1 except that the prepared zirconia powder was used.

Comparative Example 1-5

A zirconia powder according to the present comparative example composed of yttria-stabilized zirconia with an yttria content of 3.0% by mole was prepared in the same manner as in Example 1-1 except that yttria was added to and mixed with a hydrous zirconia sol such that the yttria concentration was 3.0% by mole and that cerium chloride heptahydrate and the $\alpha$-alumina powder were not used.

A sintered body according to the present comparative example composed of yttria-stabilized zirconia with an yttria content of 3.0% by mole was prepared in the same manner as in Example 1-1 except that the prepared zirconia powder was used and that the sintering temperature was 1500°C.

The following table shows the results for the examples and comparative examples.

[Table 1]

|  | Y$_2$O$_3$ (mol%) | CeO$_2$ (mol%) | Total of stabilizers | Ce/Y ratio | Al$_2$O$_3$ (wt%) | Density (g/cm$^3$) | Hv (GPa) | Ball drop strength (J) | Formation of impact mark |
|---|---|---|---|---|---|---|---|---|---|
| Example 1-1 | 1.1 | 3.4 | 4.5 | 1.55 | 5 | 6.04 | 10.8 | >5 | ○ |
| Example 1-2 | 1.1 | 3.9 | 5.0 | 1.77 | 5 | 5.98 | 11.3 | 2.5 | ○ |
| Example 1-3 | 1.1 | 5.0 | 6.1 | 2.27 | 5 | 6.00 | 10.7 | 1.3 | ○ |
| Example 1-4 | 0.7 | 5.0 | 5.7 | 3.57 | 5 | 6.02 | 9.8 | 4.9 | ○ |
| Example 1-5 | 1.0 | 3.6 | 4.6 | 1.80 | 5 | 5.98 | 10.4 | 4.4 | ○ |
| Comparative example 1-1 | 1.5 | 3.4 | 4.9 | 1.13 | 5 | 5.97 | 11.5 | 0.4 | × |
| Comparative example 1-2 | 2.0 | 3.9 | 5.9 | 0.98 | 5 | 6.00 | 12.5 | 0.4 | × |
| Comparative example 1-3 | 3.0 | 3.9 | 6.9 | 0.65 | 5 | 5.98 | 13.5 | 0.3 | × |
| Comparative example 1-4 | 0 | 3.4 | 3.4 | - | 5 | Unmeasurable |  |  |  |
| Comparative example 1-5 | 3.0 | 0 | 3.0 | 0 | 0 | 6.08 | 12.6 | 0.59 | × |

In the column of "Formation of impact mark" in this table, "○" indicates that an impact mark was observed after the ball drop test, and "×" indicates that no impact mark was observed. Fig. 8 shows the appearance of the sintered body according to Example 1-1 after the ball drop test. Fig. 8 shows that an impact mark (depressed portion) is formed without a fracture, such as a crack, in the region in contact with the falling weight in the ball drop test; that is, an impact mark (depressed portion) can be observed as a mark of plastic deformation. Fig. 9 shows the appearance of an enlarged impact mark (magnification: 20 times) in optical microscopic observation. The impact mark was a round depressed portion with a diameter of approximately 2.8 mm, and the depth of the impact mark (depressed portion) relative to the thickness of the sintered body was 2.5. Examples 1-1 to 1-5, which had an yttria content of 0.7% or more by mole and less than 1.5% by mole, were sintered bodies with a tetragonal phase and with a zirconia content of 95% by mass and had a density corresponding to a relative density of 98% or more. These sintered bodies had an impact mark visually observed as a mark of plastic deformation as in Fig. 8. In Examples 1-1 to 1-5, the ceria content had no influence on the formation of an impact mark, and the sintered bodies according to the present examples had a ball drop strength of 1 J or more at any ceria content.

Fig. 10 shows the appearance of the sintered body according to Comparative Example 1-3 observed with an optical microscope (magnification: 20 times) after the ball drop test. In Comparative Example 1-3, it can be observed that a crack due to Hertzian fracture develops without the formation of an impact mark through plastic deformation and results in the fracture of the sintered body. On the other hand, a sintered body with an yttria content of 1.5% or more by mole has no impact mark and has significantly low impact resistance with a ball drop strength of 0.4 J or less. Comparative Example 1-4, which contained no yttria, had a defect, such as a crack, while sintering, and the sintered body could not be subjected to measurement. Furthermore, it was confirmed from Comparative Example 1-5 that a sintered body containing only yttria as a stabilizer had no plastic deformation region.

In the sintered body according to Example 1-1, I$_{(004)/(220)}$ of the surface before the drop test and I$_{(004)/(220)}$ of a portion other than the center of impact area were 0.55, whereas I$_{(004)/(220)}$ of the center of impact area after the ball drop test was 3.43. This shows that regions with different crystalline orientations are formed in the sintered body in the ball drop test.

The sintered bodies according to Examples 1-1 to 1-5 had similar color tones, for example, the sintered body according to Example 1-1 had L* = 92.41, a* = -3.89 and b* = 16.01, and the sintered body according to Example 1-4 had L* = 93.21, a* = -3.18 and b* = 18.38.

Example 1-6

A zirconia powder according to the present example composed of yttria- and ceria-stabilized zirconia with an yttria content of 1.1% by mole and a ceria content of 3.9% by mole was prepared in the same manner as in Example 1-1 except that cerium chloride heptahydrate was added to and mixed with a hydrous zirconia sol such that the ceria concentration was 3.9% by mole and that the $\alpha$-alumina powder was not used to prepare a slurry.

A sintered body according to the present example composed of yttria- and ceria-stabilized zirconia with the remainder having an yttria content of 1.1% by mole and a ceria content of 3.9% by mole was prepared in the same manner as in Example 1-1 except that the prepared zirconia powder was used.

Example 1-7

A zirconia powder according to the present example composed of yttria- and ceria-stabilized zirconia containing 1% by mass of alumina and the remainder with an yttria content of 1.1% by mole and a ceria content of 3.9% by mole was prepared in the same manner as in Example 1-1 except that cerium chloride heptahydrate was added to and mixed with a hydrous zirconia sol such that the ceria concentration was 3.9% by mole and that the $\alpha$-alumina powder was added such that the alumina content was 1% by mass to prepare a slurry.

A sintered body according to the present example composed of yttria- and ceria-stabilized zirconia containing 1% by mass of alumina and the remainder with an yttria content of 1.1% by mole and a ceria content of 3.9% by mole was prepared in the same manner as in Example 1-1 except that the prepared zirconia powder was used.

Example 1-8

A zirconia powder according to the present example composed of yttria- and ceria-stabilized zirconia containing 3% by mass of alumina and the remainder with an yttria content of 1.1% by mole and a ceria content of 3.9% by mole was prepared in the same manner as in Example 1-1 except that cerium chloride heptahydrate was added to and mixed with a hydrous zirconia sol such that the ceria concentration was 3.9% by mole and that the $\alpha$-alumina powder was added such that the alumina content was 3% by mass to prepare a slurry.

A sintered body according to the present example composed of yttria- and ceria-stabilized zirconia containing 3% by mass of alumina and the remainder with an yttria content of 1.1% by mole and a ceria content of 3.9% by mole was prepared in the same manner as in Example 1-1 except that the prepared zirconia powder was used.

Example 1-9

A zirconia powder according to the present example composed of yttria- and ceria-stabilized zirconia containing 7% by mass of alumina and the remainder with an yttria content of 1.1% by mole and a ceria content of 3.9% by mole was prepared in the same manner as in Example 1-1 except that cerium chloride heptahydrate was added to and mixed with a hydrous zirconia sol such that the ceria concentration was 3.9% by mole and that the $\alpha$-alumina powder was added such that the alumina content was 7% by mass to prepare a slurry.

A sintered body according to the present example composed of yttria- and ceria-stabilized zirconia containing 7% by mass of alumina and the remainder with an yttria content of 1.1% by mole and a ceria content of 3.9% by mole was prepared in the same manner as in Example 1-1 except that the prepared zirconia powder was used.

Example 1-10

A zirconia powder according to the present example composed of yttria- and ceria-stabilized zirconia containing 10% by mass of alumina and the remainder with an yttria content of 1.1% by mole and a ceria content of 3.4% by mole was prepared in the same manner as in Example 1-1 except that the $\alpha$-alumina powder was added such that the alumina content was 10% by mass to prepare a slurry.

A sintered body according to the present example composed of yttria- and ceria-stabilized zirconia containing 10% by mass of alumina and the remainder with an yttria content of 1.1% by mole and a ceria content of 3.4% by mole was prepared in the same manner as in Example 1-1 except that the prepared zirconia powder was used.

Example 1-11

A zirconia powder according to the present example composed of yttria- and ceria-stabilized zirconia containing 16.4% by mass of alumina and the remainder with an yttria content of 1.1% by mole and a ceria content of 3.4% by mole was prepared in the same manner as in Example 1-1 except that the $\alpha$-alumina powder was added such that the alumina content was 16.4% by mass to prepare a slurry.

A sintered body according to the present example composed of yttria- and ceria-stabilized zirconia containing 16.4% by mass of alumina and the remainder with an yttria content of 1.1% by mole and a ceria content of 3.4% by mole was prepared in the same manner as in Example 1-1 except that the prepared zirconia powder was used.

The following table shows the results for the examples.

[Table 2]

| | $Y_2O_3$ (mol%) | $CeO_2$ (mol%) | Total of stabilizers | Ce/Y ratio | $Al_2O_3$ (wt%) | Density (g/cm$^3$) | Hv (GPa) | Ball drop strength (J) | Formation of impact mark |
|---|---|---|---|---|---|---|---|---|---|
| Example 1-6 | 1.1 | 3.9 | 5.0 | 1.77 | 0 | 6.15 | 9.1 | >5 | ○ |
| Example 1-7 | 1.1 | 3.9 | 5.0 | 1.77 | 1 | 6.05 | 9.3 | >5 | ○ |
| Example 1-8 | 1.1 | 3.9 | 5.0 | 1.77 | 3 | 6.06 | 10.0 | 2.5 | ○ |
| Example 1-9 | 1.1 | 3.9 | 5.0 | 1.77 | 7 | 5.98 | 11.2 | 1.7 | ○ |
| Example 1-10 | 1.1 | 3.4 | 4.5 | 1.55 | 10 | 5.92 | 10.9 | 2.0 | ○ |
| Example 1-11 | 1.1 | 3.4 | 4.5 | 1.55 | 16.4 | 5.82 | 11.8 | 1.7 | ○ |

The table shows that the sintered bodies according to these examples have a density corresponding to a relative density of 98% or more and that an impact mark is formed regardless of the presence or absence of alumina and the alumina content. The table also shows that a plastic deformation region is present at a zirconia content of 83.6% or more by mass and 100% or less by mass. In the sintered body according to Examples 1-6, the depth of the center of impact area relative to the thickness of the sintered body was 2.6. The table also shows that the Vickers hardness tends to increase with the alumina content.

The sintered bodies according to Examples 1-6 to 1-11 had similar color tones, and the color tones were, for example, L* = 83.98, a* = -4.69 and b* = 20.00 in the sintered body according to Example 1-6, L* = 94.38, a* = - 3.64 and b* = 14.13 in the sintered body according to Example 1-9, and L* = 95.26, a* = -3.45 and b* = 14.22 in the sintered body according to Example 1-10.

Example 1-12

A sintered body according to the present example was prepared in the same manner as in Example 1-6 except that the sintering temperature was 1450°C.

Example 1-13

A sintered body according to the present example was prepared in the same manner as in Example 1-7 except that the sintering temperature was 1450°C.

Example 1-14

A sintered body according to the present example was prepared in the same manner as in Example 1-8 except that the sintering temperature was 1450°C.

Example 1-15

A sintered body according to the present example was prepared in the same manner as in Example 1-2 except that the sintering temperature was 1450°C.

Example 1-16

A sintered body according to the present example was prepared in the same manner as in Example 1-9 except that the sintering temperature was 1450°C.

The following table shows the results for the examples.

[Table 3]

| | Y$_2$O$_3$ (mol%) | CeO$_2$ (mol%) | Total of stabilizers | Ce/Y ratio | Al$_2$O$_3$ (wt%) | Density (g/cm$^3$) | Hv (GPa) | Ball drop strength (J) | Formation of impact mark |
|---|---|---|---|---|---|---|---|---|---|
| Example 1-12 | 1.1 | 3.9 | 5.0 | 1.77 | 0 | 6.17 | 10.1 | 1.2 | ○ |
| Example 1-13 | 1.1 | 3.9 | 5.0 | 1.77 | 1 | 6.09 | 9.7 | 1.5 | ○ |
| Example 1-14 | 1.1 | 3.9 | 5.0 | 1.77 | 3 | 6.07 | 10.7 | 2.0 | ○ |
| Example 1-15 | 1.1 | 3.9 | 5.0 | 1.77 | 5 | 5.98 | 10.8 | 1.2 | ○ |
| Example 1-16 | 1.1 | 3.9 | 5.0 | 1.77 | 7 | 5.92 | 10.8 | 1.3 | ○ |

Table 2 and the above table show that even a pressureless sintered body prepared at a higher sintering temperature has a density corresponding to a relative density of 98% or more and has a plastic deformation region, and that a decrease in the sintering temperature tends to result in higher hardness and lower ball drop strength.

The sintered bodies according to Examples 1-12 to 1-16 had similar color tones, and the color tones were, for example, L* = 83.52, a* = -4.75 and b* = 24.35 in the sintered body according to Example 1-12, and L* = 94.18, a* = -3.93 and b* = 16.79 in the sintered body according to Example 1-15.

Example 1-17

A zirconia powder according to the present example composed of yttria- and ceria-stabilized zirconia with an yttria content of 1.2% by mole and a ceria content of 3.6% by mole was prepared in the same manner as in Example 1-1 except that each of yttria and cerium chloride heptahydrate was added to and mixed with a hydrous zirconia sol such that the yttria concentration was 1.2% by mole and the ceria concentration was 3.6% by mole and the α-alumina powder was not used.

A sintered body according to the present example composed of yttria- and ceria-stabilized zirconia with the remainder having an yttria content of 1.2% by mole and a ceria content of 3.6% by mole was prepared in the same manner as in Example 1-1 except that the prepared zirconia powder was used.

Example 1-18

A zirconia powder according to the present example composed of yttria- and ceria-stabilized zirconia with an yttria content of 1.0% by mole and a ceria content of 4.0% by mole was prepared in the same manner as in Example 1-1 except that each of yttria and cerium chloride heptahydrate was added to and mixed with a hydrous zirconia sol such that the yttria concentration was 1.0% by mole and the ceria concentration was 4.0% by mole and the α-alumina powder was not used.

A sintered body according to the present example composed of yttria- and ceria-stabilized zirconia with the remainder having an yttria content of 1.0% by mole and a ceria content of 4.0% by mole was prepared in the same manner as in Example 1-1 except that the prepared zirconia powder was used.

Comparative Example 1-6

A zirconia powder according to the present comparative example composed of yttria- and ceria-stabilized zirconia with an yttria content of 3.0% by mole and a ceria content of 3.9% by mole was prepared in the same manner as in Example 1-1 except that each of yttria and cerium chloride heptahydrate was added to and mixed with a hydrous zirconia sol such that the yttria concentration was 3.0% by mole and the ceria concentration was 3.9% by mole and the α-alumina powder was not used.

A sintered body according to the present comparative example composed of yttria- and ceria-stabilized zirconia with the remainder having an yttria content of 3.0% by mole and a ceria content of 3.9% by mole was prepared in the same manner as in Example 1-1 except that the prepared zirconia powder was used.

The following table shows the results for the examples and comparative examples.

[Table 4]

| | $Y_2O_3$ (mol%) | $CeO_2$ (mol%) | Total of stabilizers | Ce/Y ratio | $Al_2O_3$ (wt%) | Density (g/cm$^3$) | Hv (GPa) | Ball drop strength (J) | Formation of impact mark |
|---|---|---|---|---|---|---|---|---|---|
| Example 1-17 | 1.2 | 3.6 | 4.8 | 1.50 | 0 | 6.17 | 10.2 | 4.9 | ○ |
| Example 1-18 | 1.0 | 4.0 | 5.0 | 2.00 | 0 | 6.18 | 9.9 | 4.9 | ○ |
| Comparative example 1-6 | 3.0 | 3.9 | 6.9 | 0.65 | 0 | 6.13 | 12.6 | 0.29 | × |

Examples 1-17 and 1-18 and Example 1-12 show that even a sintered body containing no alumina and composed of yttria- and ceria-stabilized zirconia has a plastic deformation region. On the other hand, despite having a lower ceria content than Example 1-18, the sintered body according to Comparative Example 1-6 did not have a plastic deformation region, and $I_{(004)/(220)}$ of the surface of the sintered body before the drop test and $I_{(004)/(220)}$ of the portion other than the center of impact area were 0.38, and $I_{(004)/(220)}$ of the center of impact area after the ball drop test was 0.80. Thus, no significant change in $I_{(004)/(220)}$ due to the ball drop test was observed.

<Synthesis of Pigment>

Synthesis Example 1

Lanthanum oxide ($La_2O_3$) was treated in air at 700°C and was then mixed with trimanganese tetraoxide ($Mn_3O_4$) at La:Mn = 1:1 to prepare a mixed powder. The mixed powder was heat-treated in air at 1400°C for 2 hours and was then cooled to room temperature. After the cooling, the mixed powder was ground and mixed and was heated in air at 1450°C for 4 hours to produce $LaMnO_3$.

Synthesis Example 2

$NdMnO_3$ was produced in the same manner as in Synthesis Example 1 except that neodymium oxide ($Nd_2O_3$) was used instead of lanthanum oxide and that neodymium oxide and trimanganese tetraoxide were mixed at Nd:Mn = 1:1.

Synthesis Example 3

$GdMnO_3$ was produced in the same manner as in Synthesis Example 1 except that gadolinium oxide ($Gd_2O_3$) was used instead of lanthanum oxide and that gadolinium oxide and trimanganese tetraoxide were mixed at Gd:Mn = 1:1.

Synthesis Example 4

Praseodymium oxide ($Pr_6O_{11}$) was treated in air at 700°C and was then mixed with trimanganese tetraoxide at Pr:Mn = 1:1 to prepare a mixed powder. The mixed powder was heat-treated in air at 1330°C for 1 hour and was then cooled to room temperature. After the cooling, the mixed powder was ground and mixed and was heated in air at 1450°C for 4 hours to produce $PrMnO_3$.

Synthesis Example 5

A mixed powder was prepared in the same manner as in Synthesis Example 1 except that tricobalt tetraoxide ($CO_3O_4$) was used instead of trimanganese tetraoxide and that lanthanum oxide and tricobalt tetraoxide were mixed at La:Co = 1:1. The mixed powder was heat-treated in air at 1350°C for 2 hours and was then cooled to room temperature. After the cooling, the mixed powder was ground and mixed and was heated in air at 1450°C for 4 hours to produce $LaCoO_3$.

Synthesis Example 6

A mixed powder was prepared in the same manner as in Synthesis Example 1 except that tricobalt tetraoxide was used in addition to trimanganese tetraoxide and that lanthanum oxide, trimanganese tetraoxide and tricobalt tetraoxide were mixed at La:Mn:Co = 1:0.5:0.5. The mixed powder was heat-treated in air at 1350°C for 2 hours and was then cooled to room temperature. After the cooling, the mixed powder was ground and mixed and was heated in air at 1450°C for 4 hours to produce La $(Co_{0.5}Mn_{0.5})$ $O_3$.

Synthesis Example 7

A mixed powder was prepared in the same manner as in Synthesis Example 1 except that iron oxide ($Fe_2O_3$) was used instead of trimanganese tetraoxide and that lanthanum oxide and iron oxide were mixed at La:Fe = 1:1. The mixed powder was heat-treated in air at 1350°C for 2 hours and was then cooled to room temperature. After the cooling, the mixed powder was ground and mixed and was heated in air at 1450°C for 4 hours to produce $LaFeO_3$.

Synthesis Example 8

Neodymium oxide ($Nd_2O_3$) was treated in air at 700°C and was then mixed with aluminum oxide at Nd:Al = 1:1 to prepare a mixed powder. The mixed powder was heat-treated in air at 1330°C for 1 hour and was then cooled to room temperature. After the cooling, the mixed powder was ground and mixed and was heated in air at 1450°C for 4 hours to produce $NdAlO_3$.

Synthesis Example 9

Praseodymium oxide ($Pr_6O_{11}$) was treated in air at 700°C and was then mixed with aluminum oxide at Pr:Al = 1:1 to prepare a mixed powder. The mixed powder was heat-treated in air at 1330°C for 1 hour and was then cooled to room temperature. After the cooling, the mixed powder was ground and mixed and was heated in air at 1450°C for 4 hours to produce $PrAlO_3$.

Example 2-1

Aqueous zirconium oxychloride was subjected to hydrolysis reaction to prepare a hydrous zirconia sol. Each of yttria and cerium chloride heptahydrate was mixed with the hydrous zirconia sol at an yttria concentration of 1.1% by mole and a ceria concentration of 3.6% by mole. After the mixing, the mixture was dried in air and was calcined in air at 1155°C for 2 hours to prepare an yttria- and ceria-stabilized zirconia calcined powder. The calcined powder was washed with pure water and was dried to prepare a zirconia powder composed of yttria- and ceria-stabilized zirconia with an yttria content of 1.1% by mole and a ceria content of 3.6% by mole.

The zirconia powder and $LaMnO_3$ produced in Synthesis Example 1 were added to pure water at a $LaMnO_3$ content of 0.3% by mass to prepare a slurry. The slurry was ground and mixed for 22 hours in a ball mill using zirconia balls with a diameter of 10 mm as a grinding medium. The ground and mixed slurry was dried to prepare a zirconia powder according to the present example composed of yttria- and ceria-stabilized zirconia containing 0.3% by mass of $LaMnO_3$ and the remainder with an yttria content of 1.1% by mole and a ceria content of 3.6% by mole.

The powder was granulated into powder granules and was put into a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The green body was sintered under the following conditions to prepare a sintered body according to the present example composed of yttria- and ceria-stabilized zirconia containing 0.3% by mass of $LaMnO_3$ and the remainder with an yttria content of 1.1% by mole and a ceria content of 3.6% by mole. The sintering conditions are as follows:

Sintering method: pressureless sintering
Sintering atmosphere: in air
Sintering temperature: 1550°C
Sintering time: 2 hours

Example 2-2

A sintered body according to the present example composed of yttria- and ceria-stabilized zirconia containing 0.3% by mass of NdMnO$_3$ and the remainder with an yttria content of 1.1% by mole and a ceria content of 3.6% by mole was prepared in the same manner as in Example 2-1 except that NdMnO$_3$ produced in Synthesis Example 2 was used instead of LaMnO$_3$ at a NdMnO$_3$ content of 0.3% by mass.

Example 2-3

A sintered body according to the present example composed of yttria- and ceria-stabilized zirconia containing 0.3% by mass of GdMnO$_3$ and the remainder with an yttria content of 1.1% by mole and a ceria content of 3.6% by mole was prepared in the same manner as in Example 2-1 except that GdMnO$_3$ produced in Synthesis Example 3 was used instead of LaMnO$_3$ at a GdMnO$_3$ content of 0.3% by mass.

Example 2-4

A sintered body according to the present example composed of yttria- and ceria-stabilized zirconia containing 0.3% by mass of PrMnO$_3$ and the remainder with an yttria content of 1.1% by mole and a ceria content of 3.6% by mole was prepared in the same manner as in Example 2-1 except that PrMnO$_3$ produced in Synthesis Example 2 was used instead of LaMnO$_3$ at a PrMnO$_3$ content of 0.3% by mass.

Example 2-5

A sintered body according to the present example composed of yttria- and ceria-stabilized zirconia containing 0.26% by mass of Mn$_3$O$_4$ and the remainder with an yttria content of 1.1% by mole and a ceria content of 3.6% by mole was prepared in the same manner as in Example 2-1 except that Mn$_3$O$_4$ (product name: Brownox, manufactured by Tosoh Corporation) was used instead of LaMnO$_3$ at a Mn$_3$O$_4$ content of 0.26% by mass and that the sintering temperature was 1450°C.

Example 2-6

A sintered body according to the present example composed of yttria- and ceria-stabilized zirconia containing 0.09% by mass of Mn$_3$O$_4$ and the remainder with an yttria content of 1.1% by mole and a ceria content of 3.6% by mole was prepared in the same manner as in Example 2-1 except that Mn$_3$O$_4$ was used instead of LaMnO$_3$ at a Mn$_3$O$_4$ content of 0.09% by mass and that the sintering temperature was 1450°C.

Example 2-7

A sintered body according to the present example composed of yttria- and ceria-stabilized zirconia containing 1% by mass of LaMnO$_3$ and the remainder with an yttria content of 1.1% by mole and a ceria content of 3.6% by mole was prepared in the same manner as in Example 2-1 except that LaMnO$_3$ produced in Synthesis Example 1 was used at a LaMnO$_3$ content of 1% by mass.

Comparative Example 2-1

A sintered body according to the present comparative example composed of yttria-stabilized zirconia containing 1% by mass of LaMnO$_3$ and the remainder with an yttria content of 3.0% by mole was prepared in the same manner as in Example 1 except that cerium chloride heptahydrate was not used, yttria was added to the hydrous zirconia sol at an yttria concentration of 3.0% by mole, and LaMnO$_3$ produced in Synthesis Example 1 was used at a LaMnO$_3$ content of 1% by mass.

Comparative Example 2-2

A sintered body according to the present comparative example composed of yttria- and ceria-stabilized zirconia containing 3% by mass of LaMnO$_3$ and the remainder with an yttria content of 1% by mole and a ceria content of 3.6% by mole was prepared in the same manner as in Example 2-1 except that LaMnO$_3$ produced in Synthesis Example 1 was used at a LaMnO$_3$ content of 3% by mass and that the sintering temperature was 1450°C.

The following table shows these evaluation results.

[Table 5]

|  | (mol%) | CeO$_2$ (mol%) | Total of stabilizers | Ce/Y ratio | Pigment (wt%) | Density (g/cm$^3$) | L* | a* | b* |
|---|---|---|---|---|---|---|---|---|---|
| Example 2-1 | 1.1 | 3.6 | 4.7 | 1.64 | 0.30 | 6.12 | 47.29 | 0.38 | -0.84 |
| Example 2-2 | 1.1 | 3.6 | 4.7 | 1.64 | 0.30 | 6.14 | 51.13 | 0.47 | -0.34 |
| Example 2-3 | 1.1 | 3.6 | 4.7 | 1.64 | 0.30 | 6.13 | 47.72 | 0.33 | -0.74 |
| Example 2-4 | 1.1 | 3.6 | 4.7 | 1.64 | 0.30 | 6.13 | 48.86 | 0.04 | 0.99 |
| Example 2-5 | 1.1 | 3.6 | 4.7 | 1.64 | 0.26 | 6.13 | 2.02 | 6.13 | 2.94 |
| Example 2-6 | 1.1 | 3.6 | 4.7 | 1.64 | 0.09 | 6.13 | 50.64 | 0.93 | 0.81 |
| Example 2-7 | 1.1 | 3.6 | 4.7 | 1.64 | 1.00 | 6.14 | 46.01 | 0.10 | -0.57 |
| Comparative example 2-1 | 3.0 | 0.0 | 3.0 | 0.0 | 1.00 | 6.06 | 46.90 | 1.18 | -0.53 |
| Comparative example 2-2 | 1.0 | 3.6 | 4.6 | 1.80 | 3.00 | 5.72 | Unmeasurable | | |

Examples 2-1 to 2-7 were sintered bodies with a tetragonal phase and with a zirconia content of 95% by mass and had a density corresponding to a relative density of 98% or more. These sintered bodies contained a manganese oxide with the perovskite structure or the spinel structure as a pigment, had a lightness L* of 2 or more and 52 or less, and exhibited a black color. The sintered body according to Comparative Example 2-2, which contained a large amount of pigment, had a defect, such as a crack, due to sintering and could not be evaluated in terms of density and the like.

[Table 6]

|  | Hv (GPa) | Ball drop strength (J) | Formation of impact mark |
|---|---|---|---|
| Example 2-1 | 9.46 | >5 | ○ |
| Example 2-2 | 9.66 | 3.43 | ○ |
| Example 2-3 | 9.59 | >5 | ○ |
| Example 2-4 | 9.52 | >5 | ○ |
| Example 2-5 | 9.46 | 2.94 | ○ |
| Example 2-6 | 9.59 | >5 | ○ |
| Example 2-7 | 9.46 | 1.03 | ○ |
| Comparative example 2-1 | 12.2 | 0.28 | × |
| Comparative example 2-2 | Unmeasurable | | |

In the column of "Formation of impact mark" in this table, "O" indicates that an impact mark was observed after the ball drop test, and "×" indicates that no impact mark was observed. 10 shows the appearance of the sintered body according to Example 2-1 in optical microscopic observation after the ball drop test. 10 shows that an impact mark (depressed portion) is formed without a fracture, such as a crack, in the region in contact with the falling weight in the ball drop test; that is, an impact mark (depressed portion) can be observed as a mark of plastic deformation. The white circular region observed near the center of the impact mark in Fig. 10 is a reflection shadow generated at the time of capturing the optical microscopic observation image, and this region has a color tone similar to those of other regions of the impact mark. The impact mark was a round depressed portion approximately 3 mm in diameter. The sintered bodies according to Examples 2-1 to 2-7 had an impact mark visually observed as a mark of plastic deformation as in Fig. 10.

On the other hand, the sintered body according to Comparative Example 2-1 containing only yttria as a stabilizer only had a crack in the ball drop test and did not have a plastic deformation region.

Example 2-8

A sintered body according to the present example composed of yttria- and ceria-stabilized zirconia containing 3% by mass of alumina, 1% by mass of LaMnO$_3$ and the remainder with an yttria content of 1.1% by mole and a ceria content of 3.6% by mole was prepared in the same manner as in Example 2-1 except that a zirconia powder, 3% by mass of the $\alpha$-alumina powder and LaMnO$_3$ produced in Synthesis Example 1 were added to pure water at a LaMnO$_3$ content of 1% by mass to prepare a slurry and that the sintering temperature was 1450°C.

Example 2-9

A sintered body according to the present example composed of yttria- and ceria-stabilized zirconia containing 3% by mass of alumina, 2% by mass of LaMnO$_3$ and the remainder with an yttria content of 1.1% by mole and a ceria content of 3.6% by mole was prepared in the same manner as in Example 2-1 except that a zirconia powder, 3% by mass of the $\alpha$-alumina powder and LaMnO$_3$ produced in Synthesis Example 1 were added to pure water at a LaMnO$_3$ content of 2% by mass to prepare a slurry and that the sintering temperature was 1450°C.

Example 2-10

A sintered body according to the present example composed of yttria- and ceria-stabilized zirconia containing 5% by mass of alumina, 0.3% by mass of NdAlO$_3$ and the remainder with an yttria content of 1.0% by mole and a ceria content of 3.6% by mole was prepared in the same manner as in Example 2-1 except that a zirconia powder, 5% by mass of the $\alpha$-alumina powder and NdAlO$_3$ produced in Synthesis Example 8 instead of LaMnO$_3$ were used at a NdAlO$_3$ content of 0.3% by mass.

The following table shows the evaluation results for these examples.

[Table 7]

|  | (mol%) | (mol%) | Total of stabilizers | Ce/Y ratio | Pigment (wt%) | Al$_2$O$_3$ (wt%) | Density (g/cm$^3$) | L* | a* | b* |
|---|---|---|---|---|---|---|---|---|---|---|
| Example 2-8 | 1.1 | 3.6 | 4.7 | 1.64 | 1.0 | 3.0 | 6.12 | 47.29 | 0.38 | -0.84 |
| Example 2-9 | 1.1 | 3.6 | 4.7 | 1.64 | 2.0 | 3.0 | 6.14 | 51.13 | 0.47 | -0.34 |
| Example 2-10 | 1.0 | 3.6 | 4.6 | 1.80 | 0.3 | 5.0 | 5.96 | 92.39 | -3.1 | 6.78 |

Examples 2-8 to 2-10 were sintered bodies with a tetragonal phase and with a zirconia content of 95% by mass and had a density corresponding to a relative density of 98% or more. These sintered bodies contained a metal oxide with the perovskite structure as a pigment and alumina. The sintered bodies of Examples 2-8 and 2-9 had a gray color tone, and the sintered body according to Example 2-10 had a white color tone. These sintered bodies had a lighter color tone (gray) than the sintered bodies of Example 2-1 and the like.

[Table 8]

|  | Hv (GPa) | Ball drop strength (J) | Formation of impact mark |
|---|---|---|---|
| Example 2-8 | 10.82 | 1.72 | ○ |
| Example 2-9 | 10.57 | 0.88 | ○ |
| Example 2-10 | 10.18 | 3.43 | ○ |

The sintered bodies according to Examples 2-8 to 2-10 had an impact mark visually observed as a mark of plastic deformation as in Fig. 10.

Example 2-11

A sintered body according to the present example composed of yttria- and ceria-stabilized zirconia containing 0.3% by mass of LaCoO$_3$ and the remainder with an yttria content of 1.1% by mole and a ceria content of 3.6% by mole was prepared in the same manner as in Example 2-1 except that LaCoO$_3$ produced in Synthesis Example 5 was used instead of LaMnO$_3$ at a LaCoO$_3$ content of 0.3% by mass.

Example 2-12

A sintered body according to the present example composed of yttria- and ceria-stabilized zirconia containing 0.3% by mass of La (Co$_{0.5}$Mn$_{0.5}$)O$_3$ and the remainder with an yttria content of 1.1% by mole and a ceria content of 3.6% by mole was prepared in the same manner as in Example 2-1 except that La(Co$_{0.5}$Mn$_{0.5}$)O$_3$ produced in Synthesis Example 6 was used instead of LaMnO$_3$ at a La(Co$_{0.5}$Mn$_{0.5}$)O$_3$ content of 0.3% by mass.

Example 2-13

A sintered body according to the present example composed of yttria- and ceria-stabilized zirconia containing 0.3% by mass of LaFeO$_3$ and the remainder with an yttria content of 1.1% by mole and a ceria content of 3.6% by mole was prepared in the same manner as in Example 2-1 except that LaFeO$_3$ produced in Synthesis Example 7 was used instead of LaMnO$_3$ at a LaFeO$_3$ content of 0.3% by mass.

Example 2-14

A sintered body according to the present example composed of yttria- and ceria-stabilized zirconia containing 0.3% by mass of NdAlO$_3$ and the remainder with an yttria content of 1.0% by mole and a ceria content of 3.6% by mole was prepared in the same manner as in Example 2-1 except that NdAlO$_3$ produced in Synthesis Example 8 was used instead of LaMnO$_3$ at a NdAlO$_3$ content of 0.3% by mass.
The following table shows the evaluation results for these examples.

Example 2-15

A sintered body according to the present example composed of yttria- and ceria-stabilized zirconia containing 0.3% by mass of PrAlO$_3$ and the remainder with an yttria content of 1.0% by mole and a ceria content of 3.6% by mole was prepared in the same manner as in Example 2-1 except that PrAlO$_3$ produced in Synthesis Example 9 was used instead of LaMnO$_3$ at a PrAlO$_3$ content of 0.3% by mass.

Example 2-16

A zirconia powder composed of yttria- and ceria-stabilized zirconia with an yttria content of 1.0% by mole and a ceria content of 4.0% by mole was prepared in the same manner as in Example 2-1 except that yttrium oxide and cerium chloride heptahydrate were added to and mixed with a hydrous zirconia sol at an yttria concentration of 1.0% by mole and a ceria concentration of 4.0% by mole and that the α-alumina powder was not used.
A sintered body according to the present example composed of yttria- and ceria-stabilized zirconia containing 0.4% by mass of Mn$_3$O$_4$ and the remainder with an yttria content of 1.0% by mole and a ceria content of 4.0% by mole was prepared in the same manner as in Example 2-1 except that Mn$_3$O$_4$ was used instead of LaMnO$_3$ at a Mn$_3$O$_4$ content of 0.4% by mass and that the sintering temperature was 1500°C.

Example 2-17

A sintered body according to the present example composed of yttria- and ceria-stabilized zirconia containing 0.5% by mass of CoAl$_2$O$_4$ and the remainder with an yttria content of 1.0% by mole and a ceria content of 4.0% by mole was prepared in the same manner as in Example 2-16 except that CoAl$_2$O$_4$ was used instead of Mn$_3$O$_4$ at a CoAl$_2$O$_4$ content of 0.5% by mass.
The following table shows the evaluation results for these examples.

[Table 9]

|  | Y$_2$O$_3$ (mol%) | CeO$_2$ (mol%) | Total of stabilizers | Ce/Y ratio | Pigment (wt%) | Density (g/cm$^3$) | L* | a* | b* |
|---|---|---|---|---|---|---|---|---|---|
| Example 2-11 | 1.1 | 3.6 | 4.7 | 1.64 | 0.3 | 6.10 | 49.91 | 1.98 | 3.7 |

(continued)

|  | Y$_2$O$_3$ (mol%) | CeO$_2$ (mol%) | Total of stabilizers | Ce/Y ratio | Pigment (wt%) | Density (g/cm$^3$) | L* | a* | b* |
|---|---|---|---|---|---|---|---|---|---|
| Example 2-12 | 1.1 | 3.6 | 4.7 | 1.64 | 0.3 | 6.14 | 48.30 | 0.31 | 0.02 |
| Example 2-13 | 1.1 | 3.6 | 4.7 | 1.64 | 0.3 | 6.13 | 75.00 | 2.46 | 17.86 |
| Example 2-14 | 1.0 | 3.6 | 4.6 | 1.80 | 0.3 | 6.10 | 83.41 | -2.45 | 7.33 |
| Example 2-15 | 1.0 | 3.6 | 4.6 | 1.80 | 0.3 | 6.14 | 76.26 | 12.55 | 37.29 |
| Example 2-16 | 1.0 | 4.0 | 5.0 | 2.00 | 0.4 | 6.08 | 45.65 | 0.29 | 0.33 |
| Example 2-17 | 1.0 | 4.0 | 5.0 | 2.00 | 0.5 | 6.09 | 52.69 | -3.10 | -13.40 |

Examples 2-11 to 2-17 were sintered bodies with a tetragonal phase and with a zirconia content of 95% by mass and had a density corresponding to a relative density of 98% or more. The sintered bodies contained a transition metal oxide with the perovskite structure or the spinel structure as a pigment. Example 2-11 exhibited a brown color, Example 2-12 exhibited a black color, Example 2-13 exhibited a light yellow color, Example 2-14 exhibited an orange color, and Example 2-15 exhibited a cream color.

[Table 10]

|  | Hv (GPa) | Ball drop strength (J) | Formation of impact mark |
|---|---|---|---|
| Example 2-11 | 9.34 | 1.96 | ○ |
| Example 2-12 | 9.48 | 3.92 | ○ |
| Example 2-13 | 9.43 | 2.94 | ○ |
| Example 2-14 | 9.88 | 1.03 | ○ |
| Example 2-15 | 9.60 | >5 | ○ |
| Example 2-16 | 9.83 | 2.20 | ○ |
| Example 2-17 | 9.97 | 3.00 | ○ |

The sintered bodies according to Examples 2-11 to 2-17 had an impact mark visually observed as a mark of plastic deformation as in Fig. 10.

Example 2-18

A zirconia powder composed of yttria- and ceria-stabilized zirconia with an yttria content of 1.0% by mole and a ceria content of 4.0% by mole was prepared in the same manner as in Example 1-1 except that yttrium oxide and cerium chloride heptahydrate were added to and mixed with a hydrous zirconia sol at an yttria concentration of 1.0% by mole and a ceria concentration of 4.0% by mole and that the α-alumina powder was not used.

A sintered body according to the present example composed of yttria- and ceria-stabilized zirconia containing 0.4% by mass of Mn$_3$O$_4$, 0.2% by mass of GdMnO$_3$ and the remainder with an yttria content of 1.0% by mole and a ceria content of 4.0% by mole was prepared in the same manner as in Example 2-1 except that instead of LaMnO$_3$ Mn$_3$O$_4$ was used at a Mn$_3$O$_4$ content of 0.4% by mass, GdMnO$_3$ produced in Synthesis Example 3 was used at a GdMnO$_3$ content of 0.2% by mass, and the sintering temperature was 1500°C.

Example 2-19

A zirconia powder composed of yttria- and ceria-stabilized zirconia with an yttria content of 1.0% by mole and a ceria content of 4.0% by mole was prepared in the same manner as in Example 1-1 except that yttrium oxide and cerium chloride heptahydrate were added to and mixed with a hydrous zirconia sol at an yttria concentration of 1.0% by mole and a ceria concentration of 4.0% by mole and that the $\alpha$-alumina powder was not used.

A sintered body according to the present example composed of yttria- and ceria-stabilized zirconia containing 0.4% by mass of $Mn_3O_4$, 0.4% by mass of $GdMnO_3$ and the remainder with an yttria content of 1.0% by mole and a ceria content of 4.0% by mole was prepared in the same manner as in Example 2-1 except that instead of $LaMnO_3$ $Mn_3O_4$ was used at a $Mn_3O_4$ content of 0.4% by mass, $GdMnO_3$ produced in Synthesis Example 3 was used at a $GdMnO_3$ content of 0.4% by mass, and the sintering temperature was 1500°C.

The following table shows the evaluation results for these examples.

[Table 11]

| | $Y_2O_3$ (mol%) | $CeO_2$ (mol%) | Total of stabilizers | Ce/Y ratio | Pigment (wt%) | Density (g/cm$^3$) | L* | a* | b* |
|---|---|---|---|---|---|---|---|---|---|
| Example 2-18 | 1.0 | 4.0 | 5.0 | 2.00 | 0.55 | 6.14 | 46.12 | 0.12 | -0.59 |
| Example 2-19 | 1.0 | 4.0 | 5.0 | 2.00 | 0.8 | 6.14 | 46.48 | 0.15 | -0.45 |

Examples 2-18 and 2-19 were sintered bodies that contained a metal oxide with the perovskite structure and a metal oxide with the spinel structure as pigments, that had a tetragonal phase, and that had a zirconia content of 95% by mass, and had a density corresponding to a relative density of 98% or more. These sintered bodies exhibited a black color.

[Table 12]

| | Hv (GPa) | Ball drop strength (J) | Formation of impact mark |
|---|---|---|---|
| Example 2-18 | 10.64 | 1.47 | ○ |
| Example 2-19 | 10.40 | 2.2 | ○ |

The sintered bodies according to Examples 2-18 and 2-19 had an impact mark visually observed as a mark of plastic deformation as in Fig. 10.

Measurement Examples

Plate-like sintered bodies 40 mm in length × 30 mm in width × 0.5 mm in thickness were prepared in the same manner as in Examples 2-1, 2-3 and 2-4 except that the amount of raw powder was reduced to decrease the sample thickness. Evaluation was performed in the same manner as in (Identifying Plastic Deformation Region) and (Measurement of Ball Drop Strength) described above except that these sintered bodies were used as measurement samples.

The following table shows the results together with the results for Comparative Example 2-3.

[Table 13]

| | Ball drop strength (J) | Formation of impact mark |
|---|---|---|
| Example 2-1 | 1.03 | ○ |
| Example 2-3 | 2.45 | ○ |
| Example 2-4 | 1.32 | ○ |
| Comparative example 2-3 | 0.28 | × |

The sintered bodies according to the examples had an impact mark visually observed as a mark of plastic deformation as in Fig. 10. Furthermore, the sintered bodies according to the examples had a sample thickness of 0.5 mm, which was a quarter of the sample thickness of Comparative Example 2-3 (sample thickness: 2.0 mm). Nevertheless, the sintered bodies according to the examples had higher ball drop strength than Comparative Example 2-3.

The entire contents of the description, claims, drawings and abstract of Japanese Patent Application Nos.

2019-223217 and 2019-223218 filed on December 10, 2019 are hereby incorporated by reference as the disclosure of the description of the present disclosure.

Reference Signs List

100 external view illustrating outline of ball drop test
101 sintered body
102 die (punch)
103a, 103b guide
104 falling weight
105 fixing tape
106 sample stage of ball drop tester
107 protective tape
200 sintered body according to present embodiment after drop test
201 sintered body
202 impact mark (depressed portion)
203 depth of impact mark (depressed portion)
300 known sintered body after drop test
301 sintered body
302 defect (crack)
400 drawing illustrating state of installation of sintered body on sample stage of drop tester
401 sintered body
402 fixing tape
403 sample stage of ball drop tester
404 double-sided tape (protective tape)
500 drawing illustrating method for measuring depth of impact mark
501 sintered body
502 impact mark (depressed portion)
503A, B line profile
504 maximum depth (L1 or L2)
601 divided sintered body
602 defect (crack)
702 impact mark (depressed portion)
1001 sintered body
1002 impact mark (depressed portion)

**Claims**

1. A sintered body comprising: zirconia containing a stabilizer; and a region in which an impact mark is formed when an impact force is applied.

2. The sintered body according to Claim 1, wherein the impact mark is a depressed portion.

3. The sintered body according to Claim 1 or 2, wherein the stabilizer content is 3% or more by mole and 10% or less by mole.

4. The sintered body according to any one of Claims 1 to 3, wherein the stabilizer is two or more selected from the group consisting of yttria, calcia, magnesia and ceria.

5. The sintered body according to any one of Claims 1 to 4, wherein the stabilizer is yttria and ceria.

6. The sintered body according to any one of Claims 1 to 5, wherein the yttria content is less than 1.5% by mole.

7. The sintered body according to any one of Claims 1 to 6, wherein the ceria content is 2% or more by mole and 7.5% or less by mole.

8. The sintered body according to any one of Claims 1 to 7, comprising alumina.

9. The sintered body according to any one of Claims 1 to 8, comprising a region in which a ratio of an intensity of a powder X-ray diffraction peak of a (004) plane of a tetragonal phase to an intensity of a powder X-ray diffraction peak of a (220) plane of the tetragonal phase is more than 0 and 1.0 or less.

10. The sintered body according to any one of Claims 1 to 9, comprising a region in which a ratio of an intensity of a powder X-ray diffraction peak of a (004) plane of a tetragonal phase to an intensity of a powder X-ray diffraction peak of a (220) plane of the tetragonal phase is more than 1.0 and 10 or less when an impact force is applied.

11. The sintered body according to any one of Claims 1 to 10, wherein the sintered body has a Vickers hardness of 12 GPa or less.

12. A member comprising the sintered body according to any one of Claims 1 to 11.

# FIG. 1

# FIG. 2

# FIG. 3

# FIG. 4

FIG. 5

FIG. 6

(a)

(b)

FIG. 7

FIG. 8

FIG. 9

FIG. 10

## INTERNATIONAL SEARCH REPORT

| International application No. |
| --- |
| PCT/JP2020/045669 |

| A. CLASSIFICATION OF SUBJECT MATTER |
| --- |
| C04B 35/488(2006.01)i<br>FI: C04B35/488 500; C04B35/488<br>According to International Patent Classification (IPC) or to both national classification and IPC |

| B. FIELDS SEARCHED |
| --- |
| Minimum documentation searched (classification system followed by classification symbols)<br>C04B35/488 |

| Documentation searched other than minimum documentation to the extent that such documents are included in the fields searched |
| --- |
| Published examined utility model applications of Japan    1922–1996<br>Published unexamined utility model applications of Japan   1971–2021<br>Registered utility model specifications of Japan       1996–2021<br>Published registered utility model applications of Japan   1994–2021 |

| Electronic data base consulted during the international search (name of data base and, where practicable, search terms used) |
| --- |
| JSTPlus/JST7580/JSTChina (JDreamIII) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | US 2014/0011661 A1 (KRSTIC, Vladlmir) 09 January 2014 (2014-01-09) claim 1, abstract, paragraph [0001] | 1-7, 11, 12 |
| A | claim 1, abstract, paragraph [0001] | 8-10 |
| X | WO 2014/002498 A1 (TOSOH CORP.) 03 January 2014 (2014-01-03) paragraphs [0021], [0022] | 1-3, 8, 12 |
| X | PAUL, A., "Micro-Raman spectroscopy of indentation induced phase transformation in nanozirconia ceramics", Advances in Applied Ceramics, 2011, 110/2, pp. 114-119, experimental, fig. 2 | 1, 2, 11 |
| A | US 4853353 A (ALLIED-SIGNAL INC.) 01 August 1989 (1989-08-01) claims 1, 2 | 1-12 |

☒ Further documents are listed in the continuation of Box C.      ☒ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 12 February 2021 (12.02.2021) | 16 March 2021 (16.03.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2020/045669

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2005-97094 A (MATSUSHITA ELECTRIC WORKS, LTD.) 14 April 2005 (2005-04-14) claim 1 | 1-12 |
| A | CN 103708831 A (YA AN YUANCHUANG CERAMIC CO., LTD.) 09 April 2014 (2014-04-09) claim 1 | 1-12 |

Form PCT/ISA/210 (continuation of second sheet) (January 2015)

| INTERNATIONAL SEARCH REPORT Information on patent family members | | International application No. PCT/JP2020/045669 | |
|---|---|---|---|

| Patent Documents referred in the Report | Publication Date | Patent Family | Publication Date |
|---|---|---|---|
| US 2014/0011661 A1 | 09 Jan. 2014 | (Family: none) | |
| WO 2014/002498 A1 | 03 Jan. 2014 | US 2015/0174863 A1 paragraphs [0023], [0024] CN 104411657 A | |
| US 4853353 A | 01 Aug. 1989 | (Family: none) | |
| JP 2005-97094 A | 14 Apr. 2005 | US 2005/0079971 A1 claim 1 CN 1607196 A | |
| CN 103708831 A | 09 Apr. 2014 | (Family: none) | |

Form PCT/ISA/210 (patent family annex) (January 2015)

**EP 4 074 674 A1**

**REFERENCES CITED IN THE DESCRIPTION**

**Patent documents cited in the description**

- JP 2008037746 A
- JP 2019501855 W
- JP 2019223217 A
- JP 2019223218 A